# EUROPÄISCHE PATENTSCHRIFT

(11) **EP 3 455 091 B1**
(45) Veröffentlichungstag und Bekanntmachung des Hinweises auf die Patenterteilung: **23.02.2022**
(21) Anmeldenummer: 17724325.0
(22) Anmeldetag: 03.05.2017
(51) Int. Cl.: B60D 1/24, B60D 1/06, G01L 1/04, G01L 1/22

(54) **VORRICHTUNG ZUM ZIEHEN EINES ANHÄNGERS UND/ODER HALTEN EINER LASTENTRÄGEREINHEIT**
DEVICE FOR PULLING A TRAILER AND/OR RETAINING A LOAD CARRYING UNIT
DISPOSITIF PERMETTANT DE TRACTER UNE REMORQUE ET/OU DE MAINTENIR UN ENSEMBLE PORTE-CHARGE

(30) Priorität: 09.05.2016 DE 102016108541
(43) Veröffentlichungstag der Anmeldung: 20.03.2019
(73) Patentinhaber: ACPS Automotive GmbH, 74379 Ingersheim (DE)
(72) Erfinder: GENTNER, Wolfgang, 71711 Steinheim (DE); KRDZALIC, Galib, 71732 Tamm (DE)
(74) Vertreter: Hoeger, Stellrecht & Partner Patentanwälte mbB
(86) Internationale Anmeldenummer: PCT/EP2017/060563
(87) Internationale Veröffentlichungsnummer: WO 2017/194371

(56) Entgegenhaltungen:
- EP-A1- 2 567 837
- EP-A2- 1 199 547
- DE-A1-102014 013 812
- DE-C1- 3 617 426
- US-A- 4 319 766
- US-A1- 2013 253 814

## Beschreibung

Die Erfindung betrifft eine heckseitig an einer Kraftfahrzeugkarosserie montierbare Vorrichtung zum Ziehen eines Anhängers und/oder Halten einer Lastenträgereinheit, umfassend einen mit einem ersten Endbereich mit der Kraftfahrzeugkarosserie verbundenen Haltearm, der an einem zweiten Endbereich mit einem Element zum Anhängen des Anhängers und/oder zum Fixieren der Lastenträgereinheit versehen ist, und ferner umfassend Sensoren zum Erfassen von durch Belastungen des Haltearms bedingten reversiblen Deformationen des Haltearms.

Eine derartige Vorrichtung ist beispielsweise aus der DE 10 2014 013 812 A1 und aus der EP 1 199 547 A2 bekannt.

Bei dieser Vorrichtung ist es jedoch nicht in einfacher Weise möglich, die mit mehreren Sensoren an verschiedenen Stellen des Haltearms erfassten Dehnungen einzelnen Krafteinwirkungen zuzuordnen.

Der Erfindung liegt daher die Aufgabe zugrunde, eine Vorrichtung zur Verfügung zu stellen bei welcher eine Zuordnung von erfassten Dehnungen zu einzelnen Krafteinwirkungen in möglichst einfacher Weise möglich ist.

Diese Aufgabe wird bei einer Vorrichtung der eingangs beschriebenen Art erfindungsgemäß dadurch gelöst, dass einem Haltearmabschnitt des Haltearms durch dessen reversible Deformationen beeinflusste Dehnungssensoren zugeordnet sind und dass zur Erfassung von mindestens einer ausgewählten Biegebelastung mindestens ein Dehnungssensor auf einer Seite und mindestens ein Dehnungssensor auf einer gegenüberliegenden Seite eines Flächenbereichs einer der ausgewählten Belastung zugeordneten Neutralreferenzfläche angeordnet sind und dass die Dehnungssensoren jeweils in einem Abstand von diesem Flächenbereich angeordnet sind.

Der Abstand des jeweiligen Dehnungssensors von dem Flächenbereich beträgt beispielsweise mindestens 2 mm, noch besser mindestens 4 mm, vorzugsweise mindestens 6 mm.

Der Vorteil der erfindungsgemäßen Lösung ist somit darin zu sehen, dass durch die Anordnung von mindestens einem Dehnungssensor auf einander gegenüberliegenden Seiten des Flächenbereichs der Neutralreferenzfläche die Möglichkeit besteht, die ausgewählte Dehnung dadurch zu erfassen, dass die auf den unterschiedlichen Seiten der Neutralreferenzfläche angeordneten Dehnungssensoren Dehnungen mit unterschiedlichem Vorzeichen, das heißt einmal eine Dehnung und einmal eine Stauchung, erfassen und somit der Beitrag der Biegebelastung zu dem den von den Dehnungssensoren gemessenen Dehnungen einfacher ermittelt werden kann.

Ein weiterer Vorteil der erfindungsgemäßen Lösung ist darin zu sehen, dass die Dehnungssensoren auf unterschiedlichen einander gegenüberliegenden Seiten eines Flächenbereichs der Neutralreferenzfläche, das heißt einer Teilfläche der Neutralreferenzfläche, liegen, so dass dadurch die Dehnungssensoren die von demselben Volumenbereich des Haltearms ausgeführten reversible Deformationen einmal als Dehnung und einmal als Stauchung erfassen.

Im Sinne der erfindungsgemäßen Lösung ist unter einer Neutralreferenzfläche diejenige Fläche zu verstehen, die einerseits durch die sich bei der ausgewählten Biegebelastung ausbildende neutrale Faser im Haltearm verläuft und die andererseits sich quer zu einer Biegebewegungsfläche erstreckt.

Unter einer Biegebewegungsfläche im Sinne der erfindungsgemäßen Lösung ist dabei diejenige Fläche zu verstehen, parallel zu welcher sich der Haltearm bei einer durch eine Krafteinwirkung in einer einzigen definierten Richtung ausgelösten Biegebelastung mit der geringsten Querbewegung zu dieser Fläche bewegt und die durch die sich bei dieser Biegebelastung ergebende neutrale Faser des Haltearms hindurchverläuft.

Gemäß einer Näherung verläuft die Biegebewegungsfläche parallel zur Richtung der Krafteinwirkung und durch die jeweilige neutrale Faser hindurch.

Ferner ist bei einer groben Näherung die Vertikalbiegebewegungsfläche bei einem gekrümmten Haltearm eine mittig durch alle Abschnitte des Haltearms und näherungsweise parallel zur Richtung der vertikalen Krafteinwirkung verlaufende Fläche.

Unter einem näherungsweise parallelen Verlauf ist insbesondere ein von einem exakt parallelen Verlauf um maximal ± 30°, noch besser maximal ± 20°, abweichender Verlauf zu verstehen.

Ist es im Rahmen der erfindungsgemäßen Vorrichtung erforderlich, mehrere Biegebelastungen zu erfassen, so ist jeder Biegebelastung eine Neutralreferenzfläche zugeordnet.

Insbesondere ist im Rahmen der erfindungsgemäßen Lösung vorgesehen, den Haltearm einer Vertikal-Biegebelastung und einer Quer-Biegebelastung auszusetzen, wobei bei einer Vertikal-Biegebelastung auszusetzen, wobei bei einer Vertikal-Biegebelastung sich eine Vertikal-Neutralreferenzfläche ausbildet und bei einer Quer-Biegebelastung sich eine Quer-Neutralreferenzfläche ausbildet.

Hinsichtlich des Flächenbereichs der jeweiligen Neutralreferenzfläche und der relativen Anordnung der Dehnungssensoren zu diesem Flächenbereich wurden bislang keine näheren Angaben gemacht.

So ist es günstig, wenn eine senkrechte Projektion der auf einander gegenüberliegenden Seiten der Neutralreferenzfläche angeordneten Dehnungssensoren auf den Flächenbereich innerhalb dieses Flächenbereichs liegt, das heißt, dass die Projektion jedes der Dehnungssensoren auf diesen Flächenbereich innerhalb desselben liegt.

Ferner wird die Lage der Dehnungssensoren relativ zueinander dadurch noch präziser vorgegeben, dass der Flächenbereich in jeder seiner Ausdehnungsrichtungen eine Ausdehnung aufweist, die maximal das Doppelte, noch besser maximal das 1,5-fache, der Ausdehnung jedes der Dehnungssensoren parallel zu dieser Ausdehnungsrichtung ist.

Das heißt, dass der Flächenbereich hinsichtlich seiner Ausdehnungen in den innerhalb der Neutralreferenzfläche liegenden Ausdehnungsrichtungen beschränkt ist, um dadurch zu erreichen, dass die Dehnungssensoren im Wesentlichen an der Neutralreferenzfläche gespiegelt relativ zueinander angeordnet sind und nicht in einer Ausdehnungsrichtung der Neutralreferenzfläche zueinander nennenswert versetzt sind, so dass dadurch sichergestellt wird, dass auf gegenüberliegenden Seiten der Neutralreferenzfläche die Dehnungen oder Stauchungen desselben Volumenbereichs erfasst werden.

Ferner ist vorzugsweise vorgesehen, dass die auf einander gegenüberliegenden Seiten der jeweiligen Neutralreferenzfläche angeordneten Dehnungssensoren in derartigen Abständen von der jeweiligen Neutralreferenzfläche angeordnet sind, dass die Abstände des mindestens einen Dehnungssensors auf einer Seite von dem Flächenbereich der Neutralreferenzfläche im Bereich von dem 0,5-fachen bis zum 1,5-fachen, noch besser im Bereich von dem 0,7-fachen bis zum 1,3-fachen, des Abstands des mindestens einen Dehnungssensors auf der gegenüberliegenden Seite von dem Flächenbereich liegt.

Dadurch ist sichergestellt, dass die Abstände der dem jeweiligen Flächenbereich zugeordneten Dehnungssensoren von diesem Flächenbereich sich nicht zu stark unterscheiden, so dass dadurch sichergestellt werden kann, dass die von den Dehnungssensoren erfassten Dehnungen oder Stauchungen in derselben Größenordnung liegen.

Dies hat den Vorteil, dass dadurch die durch die Dehnungssensoren erzeugten Signale sich in vereinfachter Weise der jeweiligen Biegebelastung aufgrund ihres unterschiedlichen Vorzeichens zuordnen lassen.

Die erfindungsgemäße Anordnung der Dehnungssensoren sieht vor, dass diese ungefähr parallel zu dem Flächenbereich der Neutralreferenzfläche ausgerichtet sind.

Unter einer ungefähr parallelen Ausrichtung ist dabei zu verstehen, dass die Ausrichtung der Dehnungssensoren von der exakt parallelen Ausrichtung zu dem Flächenbereich der Neutralreferenzfläche um maximal ± 20°, besser maximal ± 10°, abweichen.

Beispielsweise ist in diesem Zusammenhang vorgesehen, dass die Dehnungssensoren auf ungefähr parallel zu dem Flächenbereich verlaufenden Sensorträgerflächen angeordnet und mit diesen verbunden sind.

Im Rahmen der bislang beschriebenen Ausführungsformen der erfindungsgemäßen Vorrichtung wurde die ausgewählte Biegebelastung nicht näher spezifiziert.

Erfindungsgemäß ist die ausgewählte Biegebelastung durch eine Kraft auf das Element in vertikaler Richtung bedingt und die dadurch bedingte Neutralreferenzfläche ist eine Vertikal-Neutralreferenzfläche.

Unter einer Kraft auf das Element in vertikaler Richtung ist dabei eine Kraft zu verstehen, die auf das Element dann einwirkt, wenn die erfindungsgemäße Vorrichtung an einer Kraftfahrzeugkarosserie montiert ist und das Kraftfahrzeug auf einer horizontalen Fahrbahn steht.

Eine derartige Kraft in vertikaler Richtung wird üblicherweise als Stützlast bezeichnet, die bei einer erfindungsgemäßen Vorrichtung bevorzugt bei einer statischen Messung, also nicht im Fahrbetrieb, bestimmt wird.

Eine derartige Stützlast bewirkt bei der erfindungsgemäßen Vorrichtung aufgrund des Abstands des Elements zum Ziehen eines Anhängers und/oder halten einer Lastenträgereinheit von dem ersten Endbereich des Haltearms, welcher mit der Kraftfahrzeugkarosserie verbunden ist, insbesondere ausschließlich eine Biegebelastung des Haltearms, die aufgrund der erfindungsgemäßen Lösung in einfacher Weise in Form einer statischen Messung, das heißt nicht im Fahrbetrieb, erfasst werden kann und insbesondere in einfacher Weise von einer Zugbelastung beim Fahrbetrieb unterschieden werden kann. Um jedoch auch in der Lage sein zu können, bei der erfindungsgemäßen Vorrichtung auf das Element wirkende Zugbelastungen zu erfassen, ist vorgesehen, dass die Dehnungssensoren derart angeordnet und ausgerichtet sind, dass sie eine horizontale Zugbelastung durch eine horizontale Längskraft auf das Element erfassen.

Unter einer horizontalen Längskraft auf das Element ist dabei eine in Fahrzeuglängsrichtung und horizontal auf das Element wirkende Kraft bei an einer Fahrzeugkarosserie montierter erfindungsgemäßer Vorrichtung und auf einer horizontalen Fahrbahn stehendem Kraftfahrzeug zu verstehen.

Eine derartige horizontale Längskraft wird üblicherweise als Zugkraft bezeichnet, die bei einer erfindungsgemäßen Vorrichtung ebenfalls von Relevanz ist.

Insbesondere dient die Bestimmung einer derartigen Zugkraft zur Bestimmung einer Anhängermasse, wenn bei einem Fahrzeug neben der Zugkraft die Beschleunigung in der horizontalen Längsrichtung, beispielsweise erfasst durch einen Beschleunigungssensor, bekannt ist.

Hierzu erfolgen insbesondere dynamische Messungen der auf den Anhänger oder die Lastenträgereinheit wirkenden Kräfte.

Besonders günstig ist es zur Messung der horizontalen Zugbelastung, wenn der Haltearmabschnitt derart ausgewählt ist, dass die Neutralreferenzfläche dieses Haltearmabschnitts eine Komponente in einer horizontalen Längsrichtung, insbesondere einer Fahrzeuglängsrichtung, erfasst, insbesondere eine nennenswerte Komponente in der horizontalen Längsrichtung umfasst.

Vorzugsweise ist dabei vorgesehen, dass die Neutralreferenzfläche dieses Halteabschnitts im Wesentlichen parallel zu der horizontalen Längsrichtung verläuft.

Dabei ist unter einem im Wesentlichen parallelen Verlauf der Neutralreferenzfläche zur horizontalen Längsrichtung zu verstehen, dass der Verlauf von einem exakt parallelen Verlauf um einen Winkel von weniger als ± 30°, vorzugsweise ein Winkel von weniger als ± 20° abweicht.

Alternativ oder Ergänzend zu den vorstehend beschriebenen Merkmalen ist bei einer Vorrichtung der eingangs beschriebenen Art zur Lösung der eingangs genannten Aufgabe erfindungsgemäß vorgesehen, dass eine Sensoreinheit einen Sensorträger aufweist, der auf einander gegenüberliegenden Seiten mit Sensorträgerflächen versehen ist, auf denen Dehnungssensoren angeordnet und mit diesen verbunden sind und dass der Sensorträger mit einem deformierbaren Halteabschnitt des Haltearms derart verbunden ist, dass der Sensorträger ein reversible Deformationsverhalten zeigt, das qualitativ mit dem reversiblen Deformationsverhalten des Haltearmabschnitts identisch ist.

Diese Lösung hat den Vorteil, dass hiermit die Möglichkeit geschaffen wurde, die Dehnungssensoren nicht unmittelbar am Haltearm anzuordnen, sondern an einem Sensorträger, der mit einem Haltearmabschnitt des Haltearms derart verbunden ist, dass dieser qualitativ dasselbe Dehnungsverhalten wie der Haltearmabschnitt zeigt.

Dadurch ist einerseits die Möglichkeit gegeben, das reversible Deformationsverhalten des Haltearmabschnitts zu erfassen, andererseits kann hierzu ein Sensorträger eingesetzt werden, der unabhängig von dem Haltearm ausgebildet werden kann, während der Haltearm so auszubilden ist, dass dieser den Belastungen beim Gebrauch der erfindungsgemäßen Vorrichtung standhält.

Insbesondere ist dabei der Sensorträger so relativ zum Haltearmabschnitt angeordnet, dass eine zur Erfassung einer ausgewählten Biegebelastung eine dieser Biegebelastung zugeordnete Neutralreferenzfläche des Haltebereichs einen zwischen den Sensorträgerflächen liegenden Volumenbereich des Sensorträgers durchsetzt.

Bei dieser Anordnung des Sensorträgers ist somit sichergestellt, dass die auf den Sensorträgerflächen angeordneten Dehnungssensoren in der Lage sind, die reinen Biegebelastungen dadurch zu erfassen, dass der Dehnungssensor auf einer Seite der Neutralreferenzfläche eine Dehnung und der Dehnungssensor auf der anderen Seite der Neutralreferenzfläche eine Stauchung erfährt.

Besonders günstig ist dabei eine Anordnung des Sensorträgers relativ zum Haltearmabschnitt, bei welcher die Neutralreferenzfläche einen mittigen Volumenbereich des Sensorträgers durchsetzt, so dass dadurch der Abstand des mindestens einen Dehnungssensors auf der einen Seite der Neutralreferenzfläche näherungsweise dem Abstand des Dehnungssensors auf der anderen Neutralreferenzfläche entspricht.

Besonders günstig lassen sich die Dehnungen dann erfassen, wenn sich der Sensorträger im Wesentlichen längs der Neutralreferenzfläche erstreckt.

Unter einer Erstreckung im Wesentlichen längs der Neutralreferenzfläche ist zu verstehen, dass die Erstreckung von einem exakt parallelen Verlauf um maximal ± 30° abweichen kann.

Insbesondere ist der Sensorträger so ausgebildet, dass er sich beispielsweise stabförmig oder plattenförmig in Richtung einer Längsmittelachse erstreckt und in diesem Fall ist insbesondere vorgesehen, dass die Sensorträgerflächen auf einander gegenüberliegenden Seiten einer Längsmittelachse des Sensorträgers angeordnet sind.

Insbesondere ist bei dieser Lösung ebenfalls vorgesehen, dass die einander gegenüberliegenden Sensorträgerflächen jeweils Abstände von der Neutralreferenzfläche aufweisen, die sich um einen Faktor im Bereich von 0,5 bis 1,5 voneinander unterscheiden, um somit sicherzustellen, dass die Abstände der auf einander gegenüberliegenden Seiten der Neutralreferenzfläche angeordneten Dehnungssensoren von der Neutralreferenzfläche in der gleichen Größenordnung liegen, näherungsweise gleich groß sind.

Wie bereits vorstehend erläutert, soll der Sensorträger auf das reversible Deformationsverhalten des Haltebereichs, dessen reversibles Deformationsverhalten der Sensorträger qualitativ nachvollziehen soll, keinen nennenswerten Einfluss haben.

Aus diesem Grund ist vorzugsweise vorgesehen, dass der Sensorträger auf das reversible Deformationsverhalten des Haltearmbereichs, mit welchem dieser verbunden ist, einen derart geringen Einfluss aufweist, dass die Größe der bei vorhandenem Sensorträger auftretenden reversiblen Deformationen des Haltearmbereichs mindestens das 0,90-fache, vorzugsweise mindestens das 0,95-fache, der Größe der reversiblen Deformation des Haltearmbereichs ohne den Sensorträger betragen.

Das heißt, dass der Sensorträger zu der Steifigkeit des Haltearmabschnitts, mit welchem dieser verbunden ist, einen unwesentlichen Beitrag leistet und somit auch die Möglichkeit besteht, den Sensorträger unabhängig von der Ausbildung des Haltearmabschnitts mit der erforderlichen Steifigkeit auszubilden.

Im einfachsten Fall kann der Sensorträger so ausgebildet sein, dass er einstückig mit dem Haltearmabschnitt verbunden ist, wobei in diesem Fall der Sensorträger zur Steifigkeit des Haltearmabschnitts nicht oder nur einen unwesentlichen Beitrag leisten soll, so dass dadurch ein großer Freiheitsgrad hinsichtlich der Ausbildung des Sensorträgers und der Anordnung der Dehnungssensoren am Sensorträger besteht.

Alternativ zum einstückigen Ausbilden des Sensorträgers am Haltearmabschnitt sieht eine weiter vorteilhafte Lösung vor, dass der Sensorträger einem Haltearmabschnitt lösbar montiertes Bauteil ist.

In diesem Fall lässt sich der Sensorträger unabhängig von dem Haltearmabschnitt ausbilden und auch im Fall von Beschädigungen austauschen.

Ferner hat diese Lösung den großen Vorteil, dass damit der Sensorträger mit den Dehnungssensoren als Einheit gefertigt und für verschiedene Haltearme eingesetzt werden kann.

Prinzipiell schafft diese Lösung die Möglichkeit, den Sensorträger aus einem Material herzustellen, dass sich von dem Material des Haltearmabschnitts sogar unterscheidet.

Aus Gründen eines möglichst gleichen Wärmedehnungsverhaltens ist jedoch vorgesehen, dass der Sensorträger aus einem Material mit demselben Wärmeausdehnungskoeffizienten, wie der Haltearmabschnitt ist, insbesondere aus demselben Material wie der Halteabschnitt ist, so dass eine Temperaturänderung aufgrund unterschiedlicher Wärmeausdehnung keine thermischen Spannungen in dem Sensorträger hervorrufen kann.

Ferner ist vorzugsweise vorgesehen, dass der Sensorträger im Abstand von einander angeordneten Endbereiche aufweist und dass zwischen den Endbereichen die Sensorträgerflächen für die Dehnungssensoren liegen, so dass sich der Sensorträger mindestens mit den Endbereichen über die Sensorträgerflächen hinaus erstreckt.

Prinzipiell ist es denkbar, den Sensorträger über seine gesamte Ausdehnung in Richtung parallel zur Neutralreferenzfläche mit dem Haltearmabschnitt zu verbinden.

Es hat sich jedoch als vorteilhaft erwiesen, wenn nur die Endbereiche des Sensorträgers in am Haltearmabschnitt angeordneten Aufnahmen gehalten sind, welche die durch die Belastungen im Haltearmabschnitt auftretenden reversiblen Deformationen auf den Sensorträger übertragen, so dass insbesondere der die Sensorträgerflächen aufweisende Abschnitt des Sensorträgers nur über die Endbereiche mit dem Haltearmabschnitt gekoppelt ist.

Um die reversiblen Deformationen des Haltearmabschnitts in einfacher Weise auf den Sensorträger übertragen zu können, ist vorzugsweise vorgesehen, dass die Endbereiche in diese Endbereiche formschlüssig fixierende Aufnahmen im Haltearmabschnitt eingreifen, die auf den Sensorträger die reversiblen Deformationen des die Aufnahmen umfassenden und sich außerdem zwischen den Aufnahmen erstreckenden Haltearmabschnitts übertragen.

Das heißt, dass in diesem Fall durch die formschlüssige Verbindung zwischen den Aufnahmen und des Haltearmabschnitts und den Endbereichen des Sensorträgers eine einfache qualitative Übertragung der reversiblen Deformationen des Haltearmabschnitts auf den Sensorträger möglich ist.

Insbesondere ist es dabei günstig, wenn die Aufnahmen sich mit mindestens einer Komponente parallel zur jeweiligen Neutralreferenzfläche erstreckende und auf die Endbereiche wirkende Aufnahmeflächen aufweisen.

Hinsichtlich der Übertragung des reversiblen Deformationsverhaltens von dem Haltearmabschnitt auf den Sensorträger ist es besonders günstig, wenn die Endbereiche sich mit mindestens einer Komponente parallel zur jeweiligen Neutralreferenzfläche erstreckende Formschlussflächen aufweisen, so dass insbesondere über diesen Formschluss eine vorteilhafte Übertragung des reversiblen Deformationsverhaltens vom Haltearmabschnitt auf den Sensorträger erfolgt.

Im Rahmen der bisherigen Erläuterung der einzelnen Ausführungsbeispiele wurde nicht im Einzelnen darauf eingegangen, wie der Sensorträger relativ zu dem Haltearmabschnitt verlaufen soll.

Die Forderung ist jedoch die, dass der Sensorträger für die jeweilige zu erfassende Biegebelastung dasselbe Dehnungsverhalten aufweisen soll, wie der Haltearmabschnitt.

Insbesondere um neben den Biegebelastungen auch horizontale Zugbelastungen in Längsrichtung, insbesondere in Fahrzeuglängsrichtung, erfassen zu können, ist vorzugsweise vorgesehen, dass der Sensorträger sich insbesondere mit seiner Längsmittelachse mit mindestens einer Komponente in einer horizontalen Längsrichtung erstreckt.

Unter der horizontalen Längsrichtung ist ebenfalls - wie bereits vorstehend genannt - eine horizontale Längsrichtung bei auf einer horizontalen Fahrbahn stehendem Kraftfahrzeug mit der montierten erfindungsgemäßen Vorrichtung zu verstehen.

Besonders günstig ist es, wenn der Sensorträger sich im Wesentlichen parallel zu der horizontalen Längsrichtung erstreckt, wobei unter einer im Wesentlichen parallelen Erstreckung zur horizontalen Längsrichtung eine Abweichung von ± 30°, vorzugsweise ± 20°, von einem exakt parallelen Verlauf zur horizontalen Längsrichtung zu verstehen ist.

Die horizontale Längsrichtung ist dabei insbesondere eine parallel zur Fahrzeuglängsrichtung verlaufende Horizontalrichtung.

Hinsichtlich der Anordnung des Sensorträgers relativ zum Haltearmabschnitt selbst wurden bislang keine näheren Angaben gemacht.

So sieht eine vorteilhafte Lösung vor, dass der Sensorträger in einer Richtung parallel zur jeweiligen Neutralreferenzebene versetzt neben dem Haltearmabschnitt angeordnet ist.

Beispielsweise erfolgt dies dadurch, dass der Sensorträger an einer Längsseite des Haltearmabschnitts angeordnet ist.

Eine andere vorteilhafte Lösung sieht vor, dass der Haltearmabschnitt eine Ausnehmung aufweist und dass der Sensorträger in die Ausnehmung des Haltearmabschnitts eingreifend angeordnet ist.

Dabei ist es nicht erforderlich, dass der Sensorträger vollständig in die Ausnehmung des Haltearmabschnitts eingreift, es ist insbesondere zur vorteilhaften Ausbildung der Aufnahmen für die Endbereiche des Sensorträgers schon bereits ausreichend, wenn der Sensorträger teilweise in die Ausnehmung des Haltearmabschnitts eingreift.

Hinsichtlich der Lage des Haltearmabschnitts wurden bislang keine näheren Angaben gemacht.

So sieht eine vorteilhafte Lösung vor, dass der Haltearmabschnitt gemessen entlang der ausgewählten Neutralreferenzfläche, einen Abstand von dem ersten Endbereich aufweist, der im Bereich vom 0,3-fachen bis zum 2-fachen des Abstandes von dem zweiten Endbereich liegt.

Eine besonders zweckmäßige Lösung sieht vor, dass zwischen einem den Haltearmabschnitt umfassenden Zwischenbereich des Haltearms und dem ersten Endbereich und/oder dem zweiten Endbereich des Haltearms ein Bogenstück vorgesehen ist.

Des Weiteren sieht eine zweckmäßige Lösung vor, dass der Haltearmabschnitt in einem mittigen Bereich zwischen dem ersten Endbereich und dem zweiten Endbereich des Haltearms liegt.

Im Zusammenhang mit den verwendeten Dehnungssensoren wurden bislang keine näheren Angaben gemacht.

Grundsätzlich ist jede Art von Dehnungssensor verwendbar.

Eine besonders günstige Lösung sieht jedoch vor, dass die Dehnungssensoren Dehnungsmessstreifen umfassen.

Um Temperatureffekte auszuschließen ist vorzugsweise vorgesehen, dass die Dehnungssensoren temperaturkompensiert sind.

Eine Realisierungsmöglichkeit eines temperaturkompensierten Dehnungssensors sieht vor, dass dieser mehrere, beispielsweise vier in Brückenschaltung, beispielsweise in Wheatstone-Brückenschaltung, verschaltete Dehnungsmessstreifen umfasst.

Hinsichtlich der Auswertung der Sensorsignale wurden bislang ebenfalls keine näheren Angaben gemacht.

So wäre es im Rahmen der erfindungsgemäßen Lösung denkbar, im Kraftfahrzeug eine Auswerteeinheit vorzugsehen.

Eine besonders günstige Lösung sieht jedoch vor, dass die an der Vorrichtung selbst eine Auswerteeinheit vorgesehen ist, welche die Signale der Dehnungssensoren auswertet.

Dies hat den Vorteil, dass dadurch die Signale der Dehnungssensoren nicht über große Distanzen weitergeleitet werden müssen und somit weiteren Störeinflüssen unterliegen.

Vorzugsweise ist dabei vorgesehen, dass die Auswerteeinheit an der Trägereinheit oder an dem Haltearm angeordnet ist.

Im Falle der Verwendung eines Sensorträgers ist vorzugsweise die Auswerteeinheit an dem Sensorträger vorgesehen, so dass die unmittelbar an dem Sensorträger vorgesehenen Dehnungssensoren mit der Auswerteeinheit verbunden werden können, und somit die Sensoreinheit selbst auch die Auswerteeinheit umfasst, so dass die Sensoreinheit als eigenständige Einheit en dem jeweiligen Haltearm einsetzbar, insbesondere montierbar ist.

Die Auswerteeinheit kann dabei in unterschiedlichster Art und Weise arbeiten.

Eine Lösung sieht vor, dass die Auswerteeinheit die auf das Element in vertikaler Richtung wirkende Kraft ermittelt.

Eine weitere vorteilhafte Lösung sieht vor, dass die Auswerteeinheit eine horizontale Querkraft ermittelt.

Eine weitere vorteilhafte Lösung sieht vor, dass die Auswerteeinheit eine horizontale Längskraft ermittelt.

Insbesondere ist es ferner für die erfindungsgemäße Lösung von Vorteil, wenn der Auswerteeinheit ein Beschleunigungssensor zugeordnet ist.

Der Beschleunigungssensor kann unabhängig von der Auswerteeinheit entweder an der Trägereinheit oder an dem Haltearm angeordnet sein.

Eine besonders günstige Lösung sieht jedoch vor, wenn der Beschleunigungssensor in der Auswerteeinheit vorgesehen ist.

Der Beschleunigungssensor kann grundsätzlich eine Vielzahl von Beschleunigungen erfassen.

Beispielsweise können die Beschleunigungen in vertikaler Richtung und in horizontaler Querrichtung sein.

Eine besonders günstige Lösung sieht vor, dass der Beschleunigungssensor mindestens eine Beschleunigung in der horizontalen Längsrichtung erfasst, da in diesem Fall die Möglichkeit besteht, unter Berücksichtigung der horizontalen Längskraft, das heißt insbesondere der Zugkraft, und der Beschleunigung in der horizontalen Längsrichtung die Masse des an dem Element angreifenden Anhängers oder der an dem Element angreifenden Lastenträgereinheit zu erfassen.

Eine besonders vorteilhafte Lösung sieht vor, dass der Haltearm ein Kugelhals ist, welcher an seinem zweiten Ende als Element zum Anhängen eines Anhängers und/oder Fixieren einer Lastenträgereinheit eine Kupplungskugel trägt.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Seitenansicht eines Kraftfahrzeugs mit einem ersten Ausführungsbeispiel einer erfindungsgemäßen Vorrichtung;
- Fig. 2: eine schematische Darstellung des ersten Ausführungsbeispiels der erfindungsgemäßen Vorrichtung mit Darstellung von Biege- und Zugbelastungen;

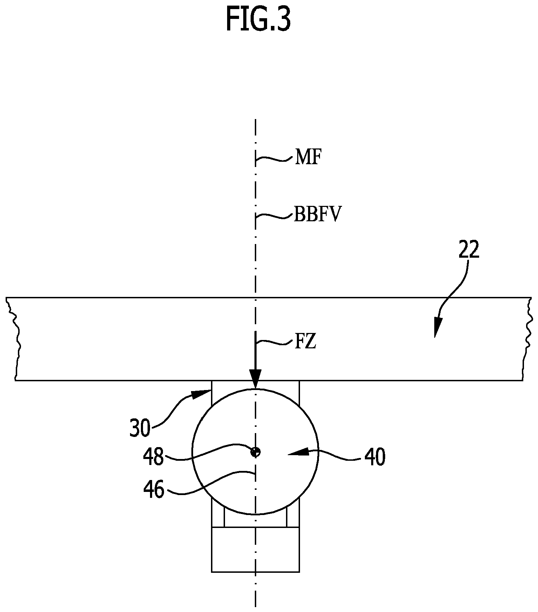

- Fig. 3: eine Ansicht des ersten Ausführungsbeispiels in Richtung des Pfeils A in Fig. 2;
- Fig. 4: einen Schnitt längs Linie 4-4 in Fig. 2;
- Fig. 5: eine Darstellung des ersten Ausführungsbeispiels mit Dehnungssensoren;
- Fig. 6: einen Schnitt längs Linie 6-6 in Fig. 5;
- Fig. 7: eine vergrößerte Darstellung der Anordnung der Dehnungssensoren relativ zu einem jeweiligen Flächenbereich der jeweiligen Neutralreferenzfläche;
- Fig. 8: eine Darstellung ähnlich Fig. 2 eines zweiten Ausführungsbeispiels der erfindungsgemäßen Vorrichtung;
- Fig. 9: eine vergrößerte Ansicht des zweiten Ausführungsbeispiels in Richtung des Pfeils B in Fig. 8;
- Fig. 10: einen Schnitt längs Linie 10-10 in Fig. 8;
- Fig. 11: eine Rückansicht eines Fahrzeugs mit einem dritten Ausführungsbeispiel einer erfindungsgemäßen Vorrichtung;
- Fig. 12: eine vergrößerte Ansicht der erfindungsgemäßen Vorrichtung in einer Arbeitsstellung mit abgenommener Stoßfängereinheit;
- Fig. 13: eine vergrößerte Ansicht ähnlich Fig. 12 der erfindungsgemäßen Vorrichtung in einer Ruhestellung bei abgenommener Stoßfängereinheit;
- Fig. 14: eine Darstellung des Haltearms gemäß dem dritten Ausführungsbeispiel mit Darstellung der einwirkenden Kräfte und der daraus resultierenden Materialbiegespannungen und Materialzugspannungen;
- Fig. 15: eine Ansicht des Haltearms gemäß Fig. 14 gemäß des Pfeils C in Fig. 14;
- Fig. 16: eine Darstellung des Haltearms gemäß Fig. 14 mit Darstellung der vorgesehenen Dehnungssensoren;
- Fig. 17: eine Darstellung eines Haltearms gemäß einem vierten Ausführungsbeispiel der erfindungsgemäßen Vorrichtung;
- Fig. 18: eine vergrößerte Seitenansicht seitliche Draufsicht auf den Haltearm gemäß Fig. 17;
- Fig. 19: eine perspektivische Darstellung eines Haltearms gemäß einem fünften Ausführungsbeispiel;
- Fig. 20: eine Darstellung des Haltearms gemäß Fig. 19 in Richtung des Pfeils D in Fig. 19;
- Fig. 21: eine Darstellung des Haltearms gemäß Fig. 19 in Richtung des Pfeils E in Fig. 19;
- Fig. 22: eine Darstellung des Haltearms gemäß einem sechsten Ausführungsbeispiel der erfindungsgemäßen Vorrichtung;
- Fig. 23: eine vergrößerte Darstellung des Haltearmabschnitts des Haltearms gemäß Fig. 22;
- Fig. 24: eine seitliche Draufsicht auf den Haltearmabschnitt des Haltearms gemäß Fig. 22 und
- Fig. 25: einen Schnitt längs Linie 25-25 in Fig. 23.

Ein als Ganzes mit 10 bezeichnetes Kraftfahrzeug umfasst eine Kraftfahrzeugkarosserie 12, welche an einem Heckbereich 14, und zwar nahe eines Fahrzeugbodens 16 mit einer Trägereinheit 20 versehen ist, die beispielsweise einen Querträger 22 aufweist, der mit dem Heckbereich 14 nahe des Fahrzeugbodens 16 verbunden ist.

Die Verbindung zwischen dem Querträger 22 kann beispielsweise über an dem Heckbereich 14 anliegende Montageflansche erfolgen oder beispielsweise durch sich in einer Fahrzeuglängsrichtung 24 erstreckende Seitenträger 26, die an sich ebenfalls in der Fahrzeuglängsrichtung 24 erstreckenden Fahrzeugkarosserieabschnitten 28 anliegen.

Mit der Trägereinheit 20 ist ein als Ganzes mit 30 bezeichneter Haltearm dadurch verbunden, dass ein erstes Ende 32 des Haltearms entweder unmittelbar oder über eine Lagereinheit an der Trägereinheit 20 gehalten ist.

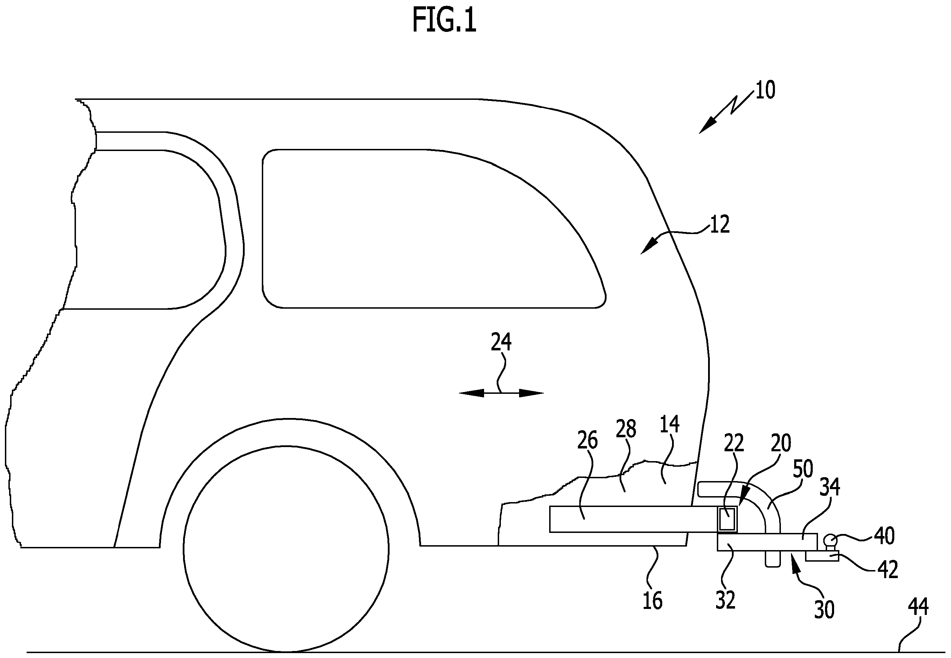

Im in Fig. 1 dargestellten ersten Ausführungsbeispiel des Haltearms 30 erfolgt eine unmittelbare Verbindung des ersten Endes 32 des Haltearms 30 mit dem Querträger 22.

Der Haltearm 30 trägt an einem dem ersten Ende 32 gegenüberliegenden zweiten Ende 34 ein Element 40, welches beispielsweise zum Anhängen eines Anhängers oder zum Fixieren einer Lastenträgereinheit vorgesehen ist.

Beispielsweise sieht ist ein derartiges Element 40 als Kupplungskugel ausgebildet, welche eine vielfach übliche Verbindung mit einer Zugkugelkupplung eines Anhängers erlaubt.

Die Kupplungskugel erlaubt aber auch eine einfache Montage einer Lastenträgereinheit, da vielfach gebräuchliche Lastenträgereinheiten ebenfalls so ausgebildet sind, dass sie an einer Kupplungskugel 40 montierbar und gegebenenfalls noch zusätzlich an dem Haltearm 30 abstützbar sind.

Das Element 40 sitzt beispielsweise auf einem Träger 42, der mit dem zweiten Endbereich 34 des Haltearms 30 verbunden ist und erstreckt sich ausgehend von einer Fahrbahn 44 abgewandter Seite des Trägers 42 in Richtung einer bei horizontaler Fahrbahn 44 ungefähr vertikal verlaufenden Mittelachse 46, die im Fall der Kupplungskugel durch einen Kugelmittelpunkt 48 hindurch verläuft.

Zur Verbesserung der ästhetischen Wirkung ist vorzugsweise der Querträger 22 unter einer heckseitigen Stoßfängereinheit 50 der Kraftfahrzeugkarosserie 12 angeordnet, wobei die Stoßfängereinheit 50 beispielsweise den Querträger 22 und das erste Ende 32 des Haltearms 30 verdeckt.

Bei dem ersten Ausführungsbeispiel ist der Haltearm 30 schematisiert als rechteckiger Balken dargestellt, wobei der Haltearm 30 beliebige Formen aufweisen kann, wie sich auch aus den nachfolgenden Ausführungsbeispielen ergibt.

Die Darstellung des Haltearms 30 als rechteckförmigen Balken im Zusammenhang mit dem ersten Ausführungsbeispiel erlaubt es, in vereinfachter Weise die für die Erfindung wesentlichen Verhältnisse bei einer Belastung des Elements 40 mit in verschiedenen Richtungen wirkenden Kräften und den dadurch bedingten reversiblen Deformationen darzustellen.

Bei einer Belastung des Elements 40 mit einer vertikalen Kraft FZ, die in vertikaler Richtung auf das Element 40 einwirkt, und der auf dieses Element 40 wirkenden Stützlast eines Anhängers oder einer Lastenträgereinheit entspricht, tritt beispielsweise dann, wenn die Kraft FZ von oben in Schwerkraftrichtung auf das Element 40 einwirkt, eine Biegebelastung des Haltearms 30 auf, aufgrund welcher ein reversibles Durchbiegen des Haltearms 30 in Richtung der Fahrbahn 44 erfolgt, das sich insbesondere in einem zwischen dem ersten Ende 32 und dem zweiten Ende 34 liegenden Haltearmabschnitt 60 ausbildet, der unbeeinflusst von der Verbindung zwischen dem ersten Ende 32 des Haltearms 30 mit dem Querträger 22 und unbeeinflusst von der Verbindung des zweiten Endes 34 des Haltearms 30 mit dem Element 40, beispielsweise einem Träger 42 für das Element 40, ist.

Die in vertikaler Richtung und in Schwerkraftrichtung einwirkende Kraft FZ bewirkt somit zumindest in dem Haltearmabschnitt 60 eine Vertikal-Biegebelastung desselben, was dazu führt, dass der Haltearmabschnitt 60 auf einer bezogen auf die Schwerkraft oberen Querseite 62 eine Dehnung erfährt und auf einer in Schwerkraftrichtung unteren Querseite 64 eine Stauchung erfährt, so dass nahe der oberen Querseite 62 durch das Biegemoment hervorgerufene Materialbiegespannungen MBSz auftreten, während nahe der unteren Querseite 64 des Haltearmabschnitts Materialbiegespannungen -MBSz auftreten, die durch die Materialstauchungen an der unteren Querseite 64 bedingt sind.

Aufgrund der ein entgegengesetztes Vorzeichen aufweisenden Materialstauchungen MBSz und -MBSz bildet sich bei der Vertikal-Biegebelastung BV zwischen diesen eine sogenannte neutrale Faser, im folgenden Vertikal-Neutralfaser NFV genannt, aus, in welcher keine Materialspannungen und somit keine Dehnungen und Stauchungen des Materials auftreten.

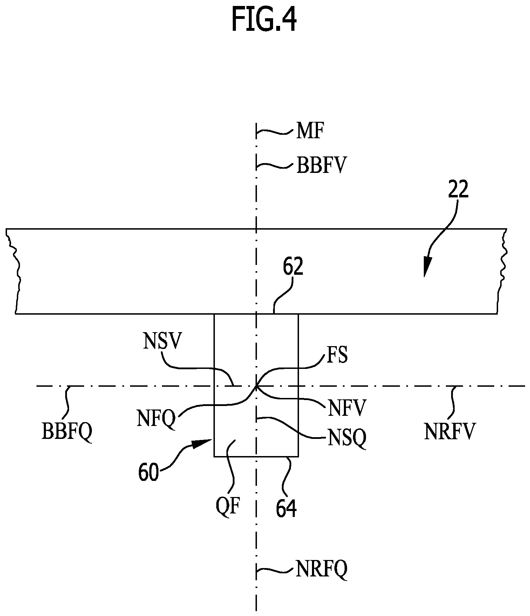

Üblicherweise liegt die Vertikal-Neutralfaser NFV, wie in Fig. 4 dargestellt, im Flächenschwerpunkt FS einer jeglichen Querschnittsfläche QF des Haltearmabschnitts 60 und somit beispielsweise in erster Näherung mittig zwischen der oberen Querseite 62 und der unteren Querseite 64.

Der Haltearmabschnitt 60 weist bei der ausschließlich in vertikaler Richtung gerichteten Kraft FZ eine sich über die gesamte Breite des Haltearmabschnitts 60 erstreckende Vertikal-Neutrale Schicht NSV auf, die durch eine Vertikal-Neutralreferenzfläche NRFV bestimmt ist, die einerseits durch die Vertikal-Neutralfaser NFV hindurch verläuft und in einer Querrichtung zur Vertikal-Neutralfaser NFV, insbesondere senkrecht zur Vertikal-Neutralfaser NFV und erfindungsgemöß senkrecht zu einer sich bei der vertikalen Biegebelastung BV ausbildenden Biegebewegungsfläche BBFV, verläuft.

Die vertikale Biegebewegungsfläche BBFV ist als die Fläche definiert, die durch die neutrale Faser NFV hindurch verläuft und parallel zu welcher sich der Haltearmabschnitt 60 bei der vertikalen Biegebelastung BV mit den geringstmöglichen, insbesondere ohne Querbewegungen bewegt.

Insbesondere verläuft die Vertikal-Neutralreferenzfläche NRFV in einer Näherung senkrecht zu einer zur Vertikalen parallelen Mittelfläche MF des Haltearmabschnitts 60, die jeweils durch einen Flächenschwerpunkt FS jeder Querschnittsfläche QF des Haltearmabschnitts 60 und somit durch die Vertikal-Neutralfaser NFV hindurchverläuft.

Erfolgt dagegen eine Belastung des Elements 40 durch eine horizontale Querkraft FY die senkrecht zur vertikalen Kraft FZ ausgerichtet ist und beispielsweise auch senkrecht zur Mittelfläche MF verläuft, so erfolgt eine Biegung des Haltearms 60 dergestalt, dass an einer sich zwischen der oberen Querseite 62 und der unteren Querseite 64 erstreckenden Längsseite 66 eine Materialdehnung und somit eine positive Materialbiegespannung MBS_{Y} erfolgt, während auf der gegenüberliegenden, sich ebenfalls zwischen der oberen Querseite 62 und der unteren Querseite 66 erstreckenden Längsseite 68 eine Materialstauchung und somit eine negative Materialbiegespannung -MBS_{Y} erfolgt.

Eine derartige Quer-Biegebelastung BQ führt ebenfalls zur Ausbildung einer Quer-Neutralfaser NFQ, die bei dem dargestellten Ausführungsbeispiel gemäß Fig. 4 aufgrund der symmetrischen Ausbildung des Haltearmabschnitts 60 mit der Neutralfaser NFV zusammenfällt.

Dies ist jedoch nicht zwingend der Fall. Bei unsymmetrischer Ausbildung des Haltearmabschnitts 60 kann die Neutralfaser NFQ anders verlaufen und anders liegen als die Neutralfaser NFV.

Bei der Belastung durch die horizontale Querkraft FY bildet sich ebenfalls in dem Haltearmabschnitt 60 eine Quer-Neutralschicht NSQ aus, in welcher keine Dehnung oder Stauchung des Materials erfolgt und somit auch keine Materialspannungen MS auftreten.

Die Neutralschicht NSQ erstreckt sich dabei in einer senkrecht zur horizontalen Querkraft FY verlaufenden Quer-Neutralreferenzfläche NRFQ die bei dem vereinfachten Ausführungsbeispiel beispielsweise mit der Mittelfläche MF zusammenfällt.

Für den Fall, dass die Quer-Neutralreferenzfläche NRFQ nicht mit der Mittelfläche MF zusammenfällt, verläuft die Quer-Neutralreferenzfläche NRFQ jedoch einerseits durch die Quer-Neutralfaser NFQ und außerdem senkrecht zu einer Quer-Biegebewegungsfläche BBF, die durch die Neutralfaser NFQ verläuft und parallel zu welcher sich der Haltearmabschnitt 60 bei der Querbiegebelastung BQ mit geringstmöglichen, insbesondere ohne Querbewegungen bewegt.

Außerdem verläuft beispielsweise auch die Quer-Neutralreferenzfläche NRFQ senkrecht zur Vertikal-Neutralreferenzfläche NRFV, was dadurch bedingt ist, dass die Vertikalkraft FZ und die horizontale Querkraft FY senkrecht zueinander verlaufen.

Darüber hinaus kann auch eine Zugbelastung des Elements 40 durch eine horizontale Längskraft FX erfolgen, die einer Beschleunigungskraft entspricht, die senkrecht zur vertikalen Kraft FZ und senkrecht zur horizontalen Querkraft FY verläuft und beispielsweise von dem Heckbereich 14 der Kraftfahrzeugkarosserie 12 weggerichtet ist, so dass sich aufgrund der horizontalen Längskraft FX in dem Haltearmabschnitt 60 Zugspannungen MZSx ausbilden, die allerdings über die jeweiligen Querschnittsflächen QF parallel zueinander und gleichgerichtet verlaufen und in erster Näherung gleich groß sind, wobei die horizontale Längskraft FX vorzugsweise bei einer Fahrt des Kraftfahrzeugs 10 auf einer horizontalen Fahrbahn ungefähr parallel zur Fahrzeuglängsrichtung 24 ausgerichtet ist.

Im vereinfachten ersten Ausführungsbeispiel ist dabei der Haltearm 30 ebenfalls so ausgerichtet, dass er horizontal und parallel zur Fahrzeuglängsrichtung 24 verläuft, so dass die horizontale Längskraft FX ausschließlich zu einer über die jeweilige Querschnittsfläche QF gleichmäßigen Materialdehnung und somit zu gleich großen Materialspannungen MZSx führt.

Die Trägereinheit 20, der Haltearm 30 und das Element 40 bilden dabei eine erfindungsgemäße Vorrichtung 70 zum Ziehen eines Anhängers und/oder Halten einer Lastenträgereinheit.

Zur Erfassung der reversiblen Deformationen des Haltearmabschnitts 60 bei den verschiedenen Belastungen durch die Vertikalkraft FZ, die horizontale Querkraft FY und die horizontale Längskraft FX ist bei dem ersten Ausführungsbeispiel der Haltearm 30 im Haltearmabschnitt 60 mit auf den Querseiten 62 und 64 angeordneten Dehnungssensoren 72 und 74 und auf den Längsseiten 66 und 68 angeordneten Dehnungssensoren 76 und 78 versehen.

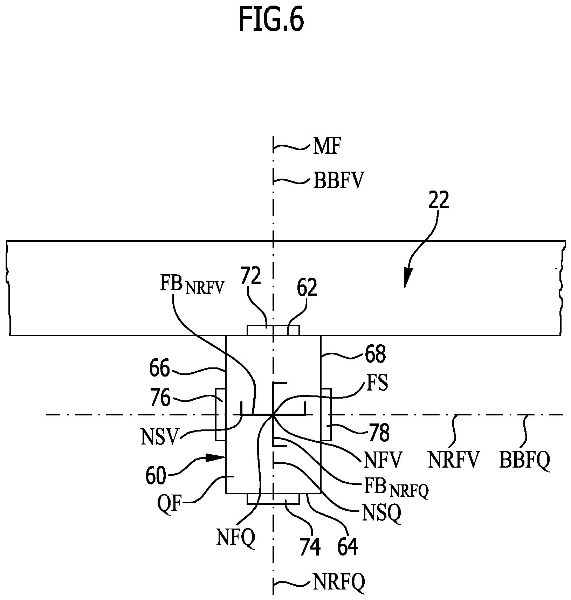

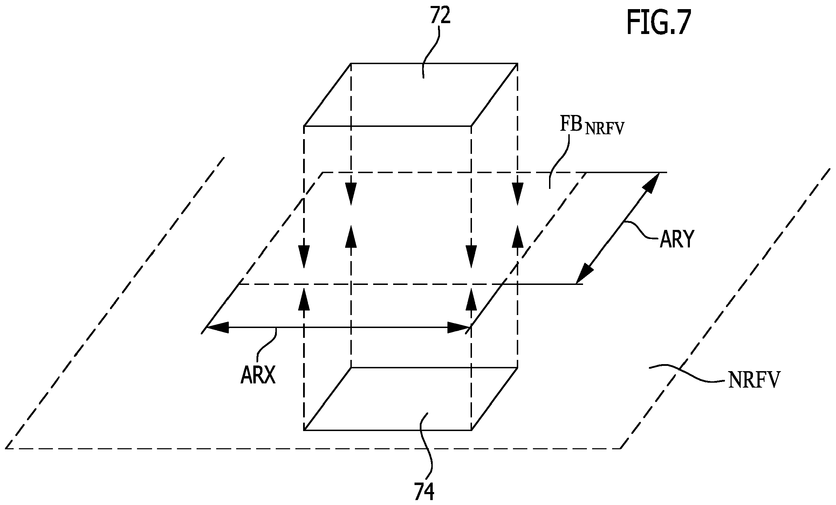

Die Dehnungssensoren 72 und 74 sind beiderseits eines Flächenbereichs FB_{NRFV} angeordnet, der eine Teilfläche der Vertikal-Neutralreferenzfläche NRFV darstellt und in seinen verschiedenen in der Vertikal-Neutralreferenzfläche NRFV liegenden Ausdehnungsrichtungen ARX, ARY maximal die 1,5-fache Ausdehnung aufweist als die Dehnungssensoren 72, 74 in diesen Ausdehnungsrichtungen aufweisen (Fig. 6, 7).

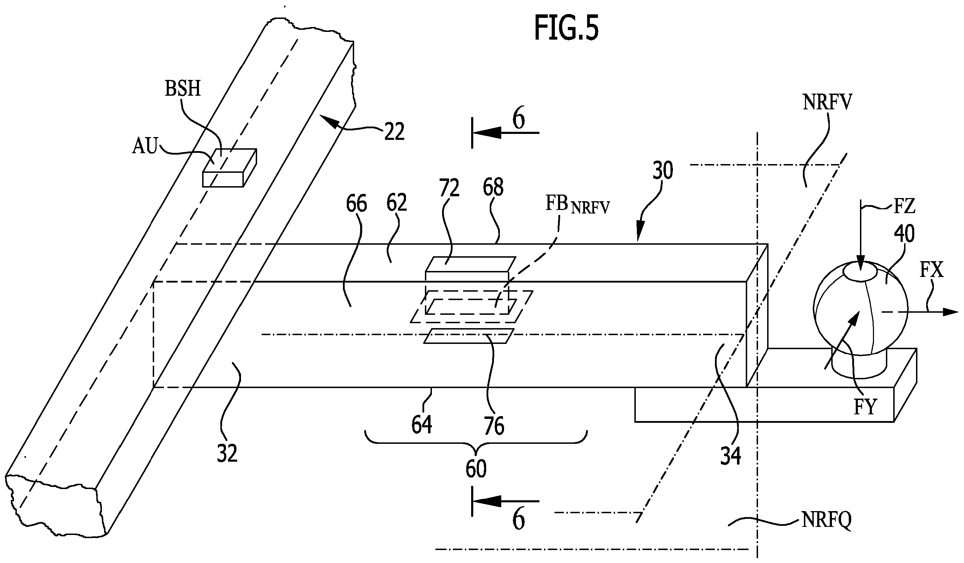

Ferner liegt eine senkrechte Projektion der Dehnungssensoren 72, 74 auf die Vertikal-Neutralreferenzfläche NRFV innerhalb des Flächenbereichs FB_{NRFV}, wie in Fig. 5 und 7 anhand des Dehnungssensors 72 dargestellt.

Damit erfassen die Dehnungssensoren 72 und 74 die durch die vertikale Biegebelastung erzeugten Materialspannungen MBS im selben Volumenbereich des Haltearmabschnitts 60 und detektieren bei der vertikalen Biegebelastung entgegengesetzte Materialbiegespannungen, die bei dem beim ersten Ausführungsbeispiel im Wesentlichen in gleichem Abstand von der Vertikal-Neutralreferenzfläche NRFV angeordneten Dehnungssensoren 72, 74 zu Signalen mit umgekehrtem Vorzeichen, jedoch in gleicher Größenordnung, vorzugsweise in ungefähr gleicher Größe führen.

Mit den Dehnungssensoren 72, 74 lässt sich somit beispielsweise bei einer statischen Belastung mit der Kraft FZ diese bestimmen, wobei im Fall der erfindungsgemäßen Vorrichtung die Kraft FZ eine Stützlast eines Anhängers oder einer Lastenträgereinheit repräsentiert, die auf das Element 40 des Haltearms 30 wirkt.

In vergleichbarer Weise sind auch die Dehnungssensoren 76 und 78 auf einander gegenüberliegenden Seiten der Quer-Neutralreferenzebene NRFQ angeordnet und relativ zu ein einem Flächenbereich FB_{NRFQ} so angeordnet, dass die Dehnungssensoren 76 und 78 bei einer senkrechten Projektion auf die Quer-Neutralreferenzfläche NRFQ innerhalb des Flächenbereichs FB_{NRFQ} liegen, wobei der Flächenbereich FB_{NRFQ} in seinen in dem Flächenbereich FB_{NRFQ} liegenden Ausdehnungsrichtungen jeweils eine Ausdehnung aufweist, die maximal der 1,5-fachen Ausdehnung der Dehnungssensoren 76, 78 parallel zu diesen Richtungen entspricht.

Außerdem liegt auch eine senkrechte Projektion der Dehnungssensoren 76 und 78 innerhalb des Flächenbereichs FB_{NRFQ}.

Durch die Anordnung der Dehnungssensoren 76, 78 in ungefähr gleichem Abstand von der Quer-Neutralreferenzfläche NRFQ bewirkt eine Querbiegebelastung BQ ebenfalls bei den Dehnungssensoren 76, 78 Signale mit umgekehrtem Vorzeichen, jedoch in der gleichen Größenordnung, vorzugsweise in ungefähr gleicher Größe.

Die durch die Sensoren 76, 78 ermittelte horizontale Querkraft FY repräsentiert insbesondere bei der erfindungsgemäßen Vorrichtung einer Querbeschleunigung auf das Element 40, die beispielsweise während des Fahrbetriebs des Kraftfahrzeugs bei Schlingerbewegungen des Kraftfahrzeugs oder des Kraftfahrzeug mit dem Anhänger oder mit der Lastenträgereinheit auftreten.

Bei Einwirkung der horizontalen Längskraft FX treten überall am Haltearmabschnitt 60 dieselben Dehnungen auf, so dass die Dehnungssensoren 72, 74, 76, 78 alle im Wesentlichen dieselben Materialbiegespannungen MZS erfassen.

Eine derartige horizontale Längskraft FX repräsentiert insbesondere bei der erfindungsgemäßen Vorrichtung eine Zugkraft beim Fahrbetrieb des Kraftfahrzeugs, die auf das Element 40 wirkt, wobei sich aus dieser Zugkraft bei Kenntnis der Beschleunigung die Masse des auf das Element 40 wirkenden Anhängers oder der auf das Element 40 wirkenden Lastenträgereinheit ermitteln lässt.

Bei der erfindungsgemäßen Lösung ist insbesondere eine Auswerteeinheit AU vorgesehen, welche die Signale der Dehnungssensoren 72, 74 und gegebenenfalls auch noch 76, 78 erfasst und daraus die Stützlast FZ auf dem Element 40 im Stillstand des Kraftfahrzeugs bestimmt, beispielsweise durch Heranziehen einer Tabelle, welche die Signale der Dehnungssensoren einer Stützlast zuordnet, und danach im Fahrbetrieb unter Berücksichtigung der gemessenen Stützlast FZ die Zugkraft FX und gegebenenfalls die Querkraft FY bestimmt, beispielsweise ebenfalls durch Heranziehen einer Tabelle, welche die Werte für die Stützlast und die Signale der Dehnungssensoren im Fahrbetrieb mit einem Wert für die Zugkraft verknüpft.

Ist zusätzlich in der Auswerteeinheit AU ein die Beschleunigung in der horizontalen Längsrichtung X erfassender Beschleunigungssensor BSH vorgesehen, so ist die Auswerteeinheit AU auch in der Lage, die Masse eines an dem Element 40 angreifenden Anhängers oder einer am Element 40 gehaltenen Lastenträgereinheit zu ermitteln, wobei durch die Anordnung des Beschleunigungssensors BSH bei der Auswerteeinheit der Wert für die Beschleunigung einfach zeitsynchron mit der Zugkraft FX zur Ermittlung der Masse zur Verfügung steht.

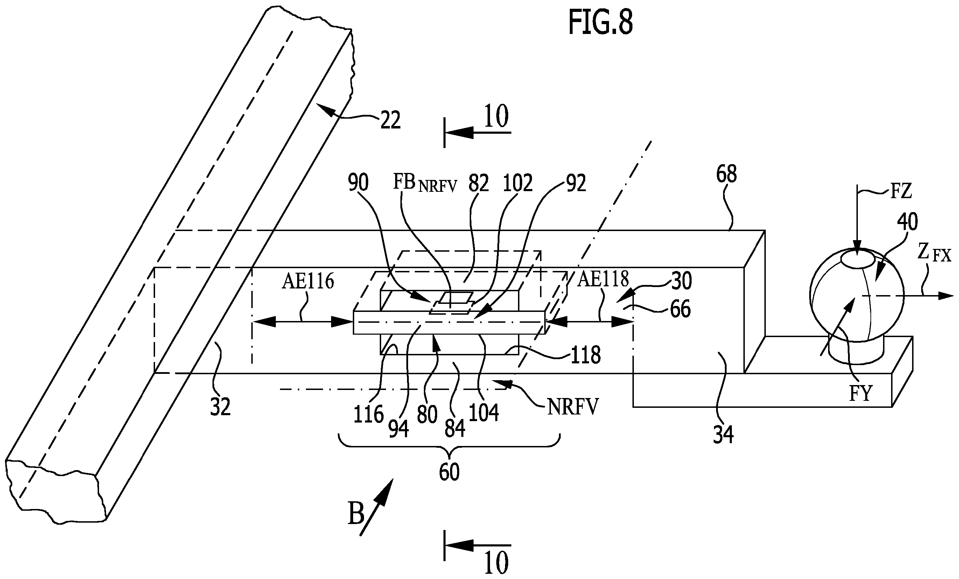

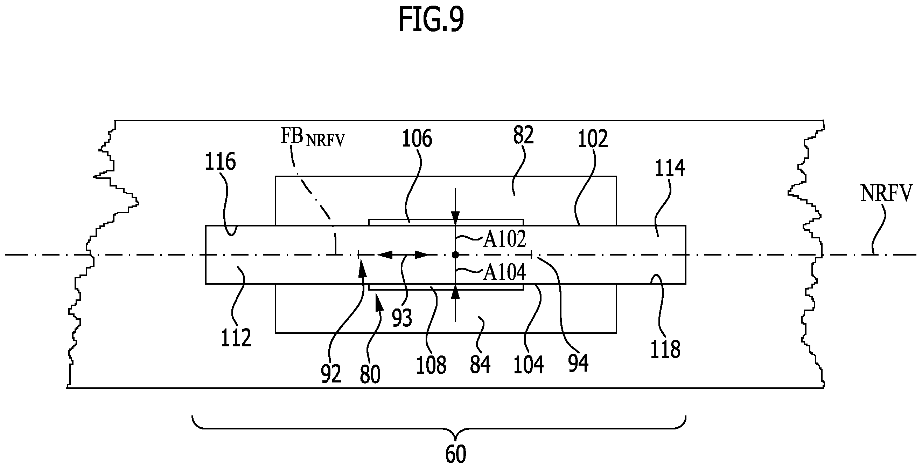

Zur Erfassung der reversiblen Deformationen des Haltearmabschnitts 60 bei den verschiedensten Belastungen durch die Vertikalkraft FZ, die horizontale Querkraft FY und die horizontale Längskraft FX ist bei einem in den Fig. 8 bis 10 dargestellten zweiten Ausführungsbeispiel der Haltearmabschnitt 60 mit einem Durchbruch 80, versehen, welcher sich beispielsweise von der Längsseite 66 zur Längsseite 68 und ungefähr parallel zur Vertikal-Neutralreferenzfläche NRFV erstreckt und welcher beiderseits der Neutralreferenzebene NRFV liegt, wobei die Stabilität des Haltearmabschnitts 60 beiderseits des Durchbruchs 80 durch einen Obergurt 82 und einen Untergurt 84 des Haltearmabschnitts 60 gewährleistet ist.

Der Durchbruch 80 beeinträchtigt dabei die Stabilität des Haltearms 30 und somit auch des Haltearmabschnitts 60 hinsichtlich einer Durchbiegung bei einer Biegebelastung durch die Vertikalkraft FZ unwesentlich, da bei einer derartigen Belastung, wie voranstehend ausgeführt, nahe der Neutralreferenzebene NRFV, die einerseits durch die Neutralfaser NFV und andererseits quer zu dieser, insbesondere senkrecht zur Biegebelastungsfläche BBFV verläuft, nur geringfügige Materialspannungen MBSz auftreten, die keinen wesentlichen Beitrag zur Stabilität des Haltearms 30 gegen eine durch die Beaufschlagung mit der Vertikalkraft FZ entstehende vertikale Biegebelastung liefern.

In diesem Durchbruch 80 ist eine als Ganzes mit 90 bezeichnete Sensoreinheit angeordnet, welche einen sich in einer Längsrichtung 93 erstreckenden Sensorträger 92 aufweist, der so angeordnet ist, dass die Neutralreferenzebene NRFV den Sensorträger 92 in einem mittigen Volumenbereich 94 durchsetzt.

Ferner weist der Sensorträger 92 auf einander gegenüberliegenden Seiten der Vertikal-Neutralreferenzfläche NRFV liegende Sensorträgerflächen 102, 104 auf, die vorzugsweise im Wesentlichen denselben Abstand zur Vertikal-Neutralreferenzfläche NRFV aufweisen und im Wesentlichen parallel zur Vertikal-Neutralreferenzfläche NRFV verlaufen. Auf diesen Sensorträgerflächen 102 und 104 sind Dehnungssensoren 106 und 108 angeordnet, die Materialdehnungen erfassen.

Der Sensorträger 92 ist dabei mit einem ersten Endbereich 112 und einem zweiten Endbereich 114, zwischen welchen die Sensorträgerflächen 102 und 104 jeweils liegen, fest mit dem Haltearmabschnitt 60 verbunden, erstreckt sich jedoch zumindest im Bereich seiner Sensorträgerflächen 102 und 104 unabhängig vom Haltearmabschnitt 60, so dass die auf den Sensorträgerflächen 102 und 104 aufliegenden Dehnungssensoren 106 und 108 ausschließlich die in dem Sensorträger 92 beiderseits der Vertikal-Neutralreferenzfläche NRFV auftretenden Dehnungen erfassen.

Die Verbindung des ersten Endbereichs 112 und des zweiten Endbereichs 114 des Sensorträgers 92 mit dem Haltearmabschnitt 60 erfolgt dabei so, dass der Sensorträger 92 qualitativ dieselben Materialspannungen MBSz erfährt, wie sie ein entsprechender Volumenbereich des Haltearmabschnitts 60 erfahren würde.

Beispielsweise erfolgt die Verbindung zwischen den dem ersten Endbereich 112 und dem zweiten Endbereich 114 des Sensorträgers 92 durch in dem Haltearmabschnitt 60 beiderseits des Durchbruchs 80 vorgesehene Ausnehmungen 116 und 118, welche die Endbereiche 112 und 114 formschlüssig umgreifend aufnehmen und somit die im Haltearmabschnitt 60 auftretenden reversiblen Deformationen zumindest qualitativ auf den Sensorträger 92 übertragen.

Vorzugsweise sind bei der erfindungsgemäßen Lösung die Dehnungssensoren 106 und 108 auf einander gegenüberliegenden Seiten der Vertikal-Neutralreferenzfläche NRFV angeordnet und zwar beiderseits eines Flächenbereichs FBNRFV der maximal in der jeweiligen Ausdehnungsrichtung die 1,5-fache Ausdehnung aufweist wie die Dehnungssensoren 106 und 108, so dass die Dehnungssensoren 106, 108 im Wesentlichen zur Vertikal-Neutralreferenzfläche NRFV gespiegelt angeordnet sind, um die auftretenden Dehnungen oder Stauchungen erfassen.

Ferner sind vorzugsweise die Abstände A102 und A104 der Sensorträgerflächen 102 und 104 von der Vertikal-Neutralreferenzfläche NRFV so gewählt, dass einer der Abstände A102, A104 maximal das 1,5-fache des anderen der Abstände A104 beziehungsweise A102 beträgt.

Dadurch lassen sich beiderseits desselben Flächenbereichs FB_{NRFV} der Vertikal-Neutralreferenzfläche NRFV auftretende Dehnungen des Sensorträgers 92 erfassen, die - wie eingangs beschrieben - im Fall einer Durchbiegung des Haltearmabschnitts 60 unterschiedliche Vorzeichen aufweisen und in der gleichen Größenordnung liegen, und im Fall einer reinen Zugbelastung des Sensorträgers 92 gleichläufige Dehnungen durch beide Dehnungssensoren 106, 108 erfassen, wie eingangs erläutert.

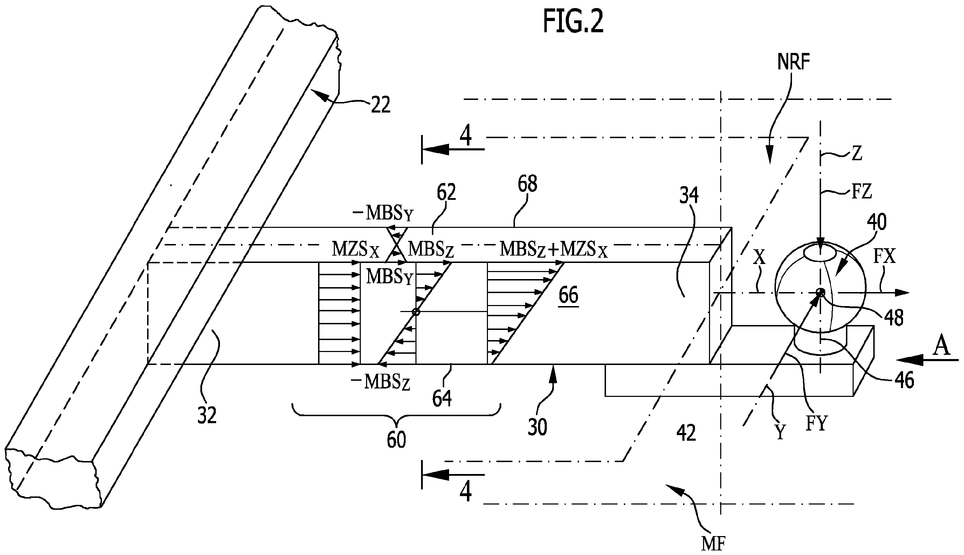

Sollten zusätzlich noch die Biegungen erfasst werden, die die horizontale Querkraft FY, wie in Fig. 2 beschrieben, erzeugt, so ist der Sensorträger 92 mit quer zu den Sensorträgerflächen 102 und 104 verlaufenden Sensorträgerflächen 122, 124 versehen, die auf einander gegenüberliegenden Seiten der Quer-Neutralreferenzfläche NRFQ angeordnet sind und auf denen Dehnungssensoren 126 und 128 angeordnet sind.

Der Sensorträger 92 ist durch die Fixierung seiner Endbereiche 112 und 114 in den Ausnehmungen 116 und 118 derart mit dem Haltearmabschnitt 16 gekoppelt, dass der Sensorträger 92 auch bei Belastungen des Haltearms 30 durch die horizontale Querkraft FY qualitativ dieselben Biegungen zeigt wie der Haltearmabschnitt 60 im Bereich des Obergurts 82 und des Untergurts 84.

Diese Dehnungssensoren 126, 128 dienen dazu, die den Materialspannungen MBS_{Y} und -MBS_{Y} entsprechenden Dehnungen zu erfassen.

Auch diese Sensorträgerflächen 122, 124 sind in Abständen A122 und A124 von der Quer-Neutralreferenzfläche NRFQ angeordnet, wobei einer der Abstände A122, A124 weniger als das 1,5-fache des Abstandes A124 beziehungsweise A122 aufweist.

Ferner liegen die Dehnungssensoren 126 und 128 auf gegenüberliegenden Seiten eines Flächenbereichs FBNRF_{Q}, wobei der Flächenbereich FB_{NRFQ} eine Ausdehnung in den einzelnen Ausdehnungsrichtungen hat, die maximal das 1,5-fache der entsprechenden Ausdehnung des jeweiligen Dehnungssensors 126, 128 aufweist, so dass die Dehnungssensoren 126, 128 im Wesentlichen an der Neutralreferenzfläche NRFQ gespiegelt beiderseits derselben angeordnet sind und somit im Wesentlichen am selben Ort auf gegenüberliegenden Seiten der Neutralreferenzfläche NRFQ die Dehnung des Materials des Sensorträgers 92 erfassen.

Desgleichen reagieren die Dehnungssensoren 126 und 128 in gleicher Weise auf Dehnungen bedingt durch die horizontale Längskraft FX derart, dass diese dieselbe Dehnung beiderseits des Sensorträgers 92 erfassen, wie dies auch bei den Dehnungssensoren 106 und 108 der Fall ist.

Die Positionierung der Aufnahmen 116 und 118 relativ zu dem ersten Endbereich 32 des Haltearms 30 und dem zweiten Endbereich 34 des Haltearms 30 erfolgt insbesondere derart, dass deren Abstände AE116 und AE118 relativ zueinander so bemessen sind, dass einer der Abstände AE116, AE118 weniger als das 1,5-fache des anderen der Abstände AE118 beziehungsweise AE116 beträgt, insbesondere sind die beiden Abstände AE116 und AE118 im Wesentlichen gleich groß.

Somit erlaubt der Sensorträger 92 mit den Dehnungssensoren 106 und 108 beziehungsweise 126 und 128 die Einflüsse der vertikalen Biegebelastung BV, der Querbiegebelastung BQ und der horizontalen Zugbelastung durch die Kraft in Längsrichtung FX entweder einzeln oder auch bei einer Überlagerung derselben zu erfassen.

Insbesondere ist dabei wesentlich, dass die Dehnungssensoren 106, 108 beziehungsweise 126, 128 bei den Biegebelastungen jeweils auf gegenüberliegenden Seiten der entsprechenden Vertikal-Neutralreferenzfläche NRFV und NRFQ Materialbiegespannungen mit unterschiedlichen Vorzeichen, das heißt einerseits Dehnungen und andererseits Stauchungen, erfassen, während die Dehnungssensoren 106 und 108 beziehungsweise 126 und 128 bei Einwirkung der horizontalen Längskraft FX im Wesentlichen in den jeweiligen Querschnittsflächen QF des Haltearmabschnitts 60 dieselben Materialzugspannungen beiderseits der jeweiligen Vertikal-Neutralreferenzfläche NRFV beziehungsweise Quer-Neutralreferenzflächen NRFQ erfassen.

Damit können die vertikale Biegebelastung und die horizontale Biegebelastung jeweils einzeln oder auch in Überlagerung mit der horizontalen Zugbelastung Messsignale der Dehnungssensoren 106 und 108 beziehungsweise 126 und 128 erzeugen, die dann einen Rückschluss auf die einzelnen Komponenten der Vertikalkraft FZ, der horizontalen Querkraft FY und der horizontalen Längskraft FX zulassen.

Bei dem zweiten Ausführungsbeispiel sind ferner diejenigen Elemente, die mit denen der voranstehenden Ausführungsbeispiele identisch sind, mit demselben Bezugszeichen versehen, so dass auf die Ausführungen zu den voranstehenden Ausführungsbeispielen Bezug genommen werden kann.

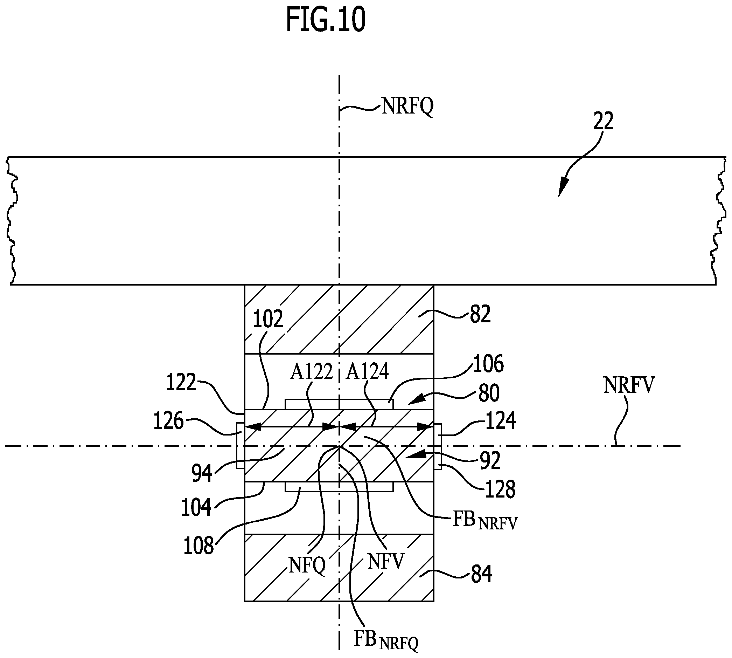

Bei einem dritten Ausführungsbeispiel einer erfindungsgemäßen Vorrichtung, dargestellt in den Fig. 10 bis 13 ist ebenfalls am Heckbereich 14 der Kraftfahrzeugkarosserie 12 des Kraftfahrzeugs 10 die Trägereinheit 20 vorgesehen, die beispielsweise ebenfalls den Querträger 22 umfasst, der mittels Seitenträgern 26 mit dem Heckbereich 14 der Kraftfahrzeugkarosserie 12 verbunden ist.

Ferner ist der Querträger 22 durch die Stoßfängereinheit 50 verdeckt angeordnet.

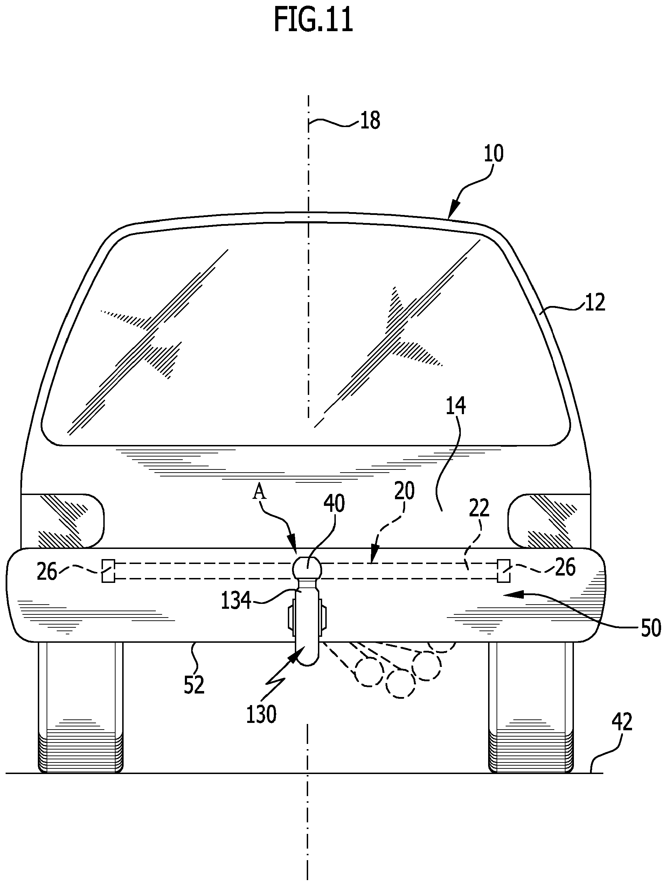

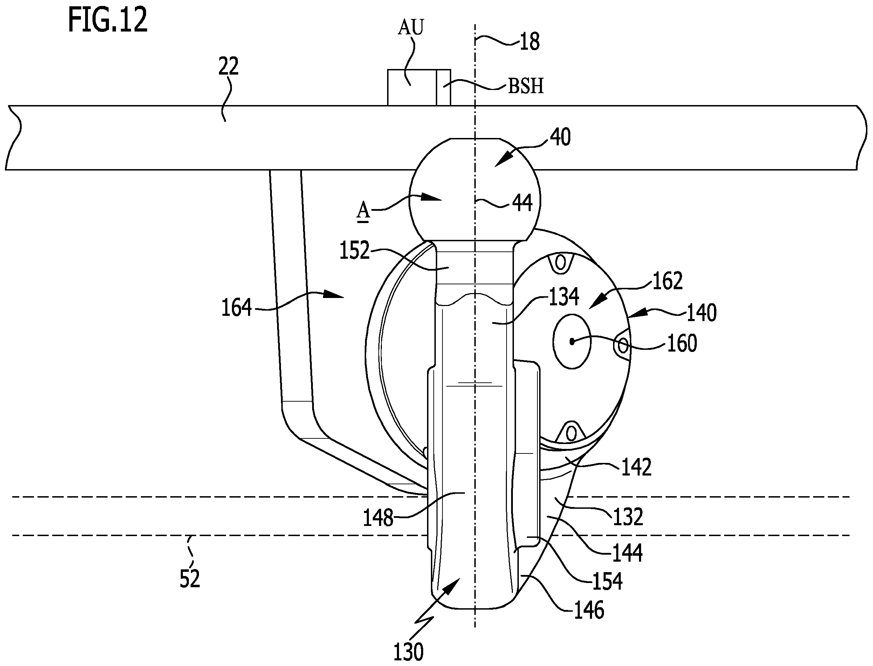

Der Haltearm 130 trägt ebenfalls das als Kupplungskugel ausgebildete Element 40, wobei sich der Haltearm 30, wie insbesondere in den Fig. 11 und 12 dargestellt, ausgehend von einer Schwenklagereinheit 140 erstreckt, mit welcher der Haltearm 130 an seinem ersten Endbereich 132 verbunden ist, wobei beispielsweise an dem ersten Endbereich 132 ein Schwenklagerkörper 142 der Schwenklagereinheit 140 angeformt ist.

Ausgehend von dem ersten Endbereich 132 erstreckt sich dann der Haltearm 130 bei diesem Ausführungsbeispiel mit einem ersten Bogenstück 144 bis zu einem Zwischenstück 146, an welches sich ein zweites Bogenstück 148 anschließt, das seinerseits das als Kupplungskugel ausgebildete Element 40 trägt, wobei zwischen dem als Kupplungskugel ausgebildete Element 40 und dem zweiten Bogenstück 148 noch ein Kugelansatz 152 vorgesehen ist.

Das zweite Bogenstück 148 bildet dann den Endbereich 134 des Haltearms 130 der dann beispielsweise den Kugelansatz 152 trägt an den sich das als Kupplungskugel ausgebildete Element 40 anschließt.

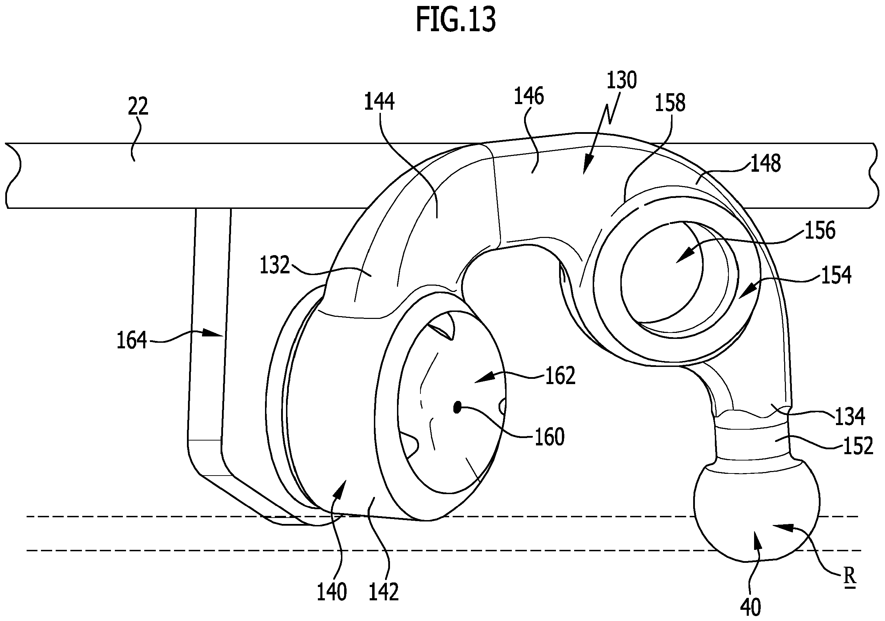

Wie in Fig. 12 und 13 dargestellt, ist zur einfachen Montage einer Kontakteinheit an dem Haltearm 130 in dem zweiten Bogenstück 148 ein Ringkörper 154 ausgebildet, der einen Durchlass 156 umschließt, in welchem eine Kontakteinheit montierbar ist.

Vorzugsweise ist dabei der Ringkörper 154 derart in dem zweiten Bogenstück 148 angeordnet, dass im Anschluss an den Ringkörper 154 mittels eines Übergangsstücks 158 ein Übergang in das Zwischenstück 146 des Haltearms 130 erfolgt.

Der Schwenklagerkörper 142 der Schwenklagereinheit 140 ist um eine insbesondere Schräg zu einer vertikalen Fahrzeuglängsmittelebene 18 verlaufende Schwenkachse 160 verschwenkbar an einer Schwenklageraufnahme 162 gelagert, die einerseits den Schwenklagerkörper 142 um die Schwenkachse 160 drehbar führt und andererseits eine zeichnerisch nicht dargestellte Verriegelungseinheit umfasst, die eine drehfeste Festlegung des Haltearms 130 gegenüber Schwenkbewegungen um die Schwenkachse 160 ermöglicht.

Die Schwenklagerkörperaufnahme 162 ist dann ihrerseits wiederum über eine Schwenklagerbasis 164 mit dem Querträger 62 fest verbunden.

Wie in Fig. 11, 12 und 13 dargestellt, ist der Haltearm 130 bei diesem dritten Ausführungsbeispiel von einer Arbeitsstellung A, dargestellt in Fig. 11 und 12, in welcher das als Kupplungskugel 40 ausgebildete Element so steht, dass dieses hinter der Stoßfängereinheit 50 auf einem einer Fahrbahn 42 abgewandten Seite steht, in eine Ruhestellung R, dargestellt in Fig. 13, verschwenkbar ist, in welcher das Element 40 der Fahrbahn 42 zugewandt angeordnet ist.

Dabei ist das Element 40 unter einer Unterkante 52 der Stoßfängereinheit 50 hindurch bewegbar.

Insbesondere erstreckt sich dabei der Haltearm 130 in der Arbeitsstellung A im Wesentlichen in der vertikalen Fahrzeuglängsmittelebene 18, wobei diese das Element 40 im Fall einer Ausbildung desselben als Kupplungskugel mittig schneidet, so dass eine vertikale Kugelmittelachse 44 in der Längsmittelebene 18 liegt.

Bei dem Haltearm 130 gemäß dem dritten Ausführungsbeispiel ist dieser durch das erste Bogenstück 144, das Zwischenstück 146 und das zweite Bogenstück 148 näherungsweise U-förmig ausgebildet, und in der Arbeitsstellung A, in welche Belastungen des Elements 40 auftreten und erfasst werden sollen, so ausgerichtet, dass beispielsweise die Kräfte FX und FZ, welche auf das Element 40, insbesondere den Kugelmittelpunkt 46, wirken über die näherungsweise U-förmige Ausbildung des Haltearms 130 auf den Schwenklagerkörper 142 der Schwenklagereinheit 140 übertragen werden, wobei ein Mittelpunkt der Kraftaufnahme durch die Schwenklagereinheit 140 die Schwenkachse 160 darstellt.

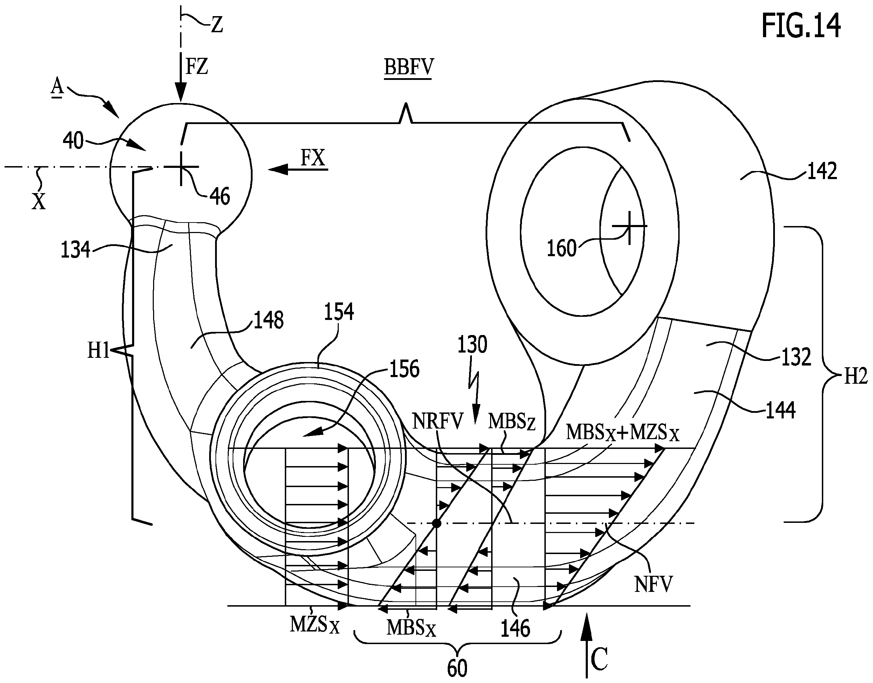

Bei diesem dritten Ausführungsbeispiel umfasst vorzugsweise das Zwischenstück 146 den Haltearmabschnitt 60, in welchem eine Erfassung der reversiblen Deformationen erfolgen soll, die beispielsweise durch die Kräfte FX und FZ (Fig. 14) auf den Haltearm 130 wirken.

Dabei ist zu beachten, dass die in Schwerkraftrichtung wirkende Vertikalkraft FZ auf das Element 40 auch im Bereich des Zwischenstücks 146 zu einer reinen Biegung desselben führt, so dass in dem Haltearmabschnitt 60 ebenfalls eine Ausbildung einer Vertikal-Neutralfaser NFV und einer Vertikal-Neutralreferenzfläche NRFV erfolgt, wobei die Neutralreferenzfläche NRFV durch die Vertikal-Neutralfaser NFV verläuft und quer zu der Vertikal-Biegebewegungsfläche BBFV, die sich parallel zur Vertikalkraft FZ in Schwerkraftrichtung erstreckt und die Fläche definiert, in welcher sich der Haltearm 130 bei Beaufschlagung durch die Vertikalkraft FZ in Schwerkraftrichtung FZ bewegt und dabei möglichst wenig quer zu dieser ausweicht.

Die Biegebewegungsfläche BBFV verläuft dabei bei einem Haltearm 130, wie er in den Fig. 12 und 13 dargestellt ist, nicht exakt parallel oder zusammenfallend mit der Fahrzeuglängsmittelebene 18, sondern gegenüber dieser zumindest abschnittsweise geneigt, da der Haltearm 130, wie in Fig. 12 dargestellt, ebenfalls nicht symmetrisch zur vertikalen Fahrzeuglängsmittelebene 18 verläuft.

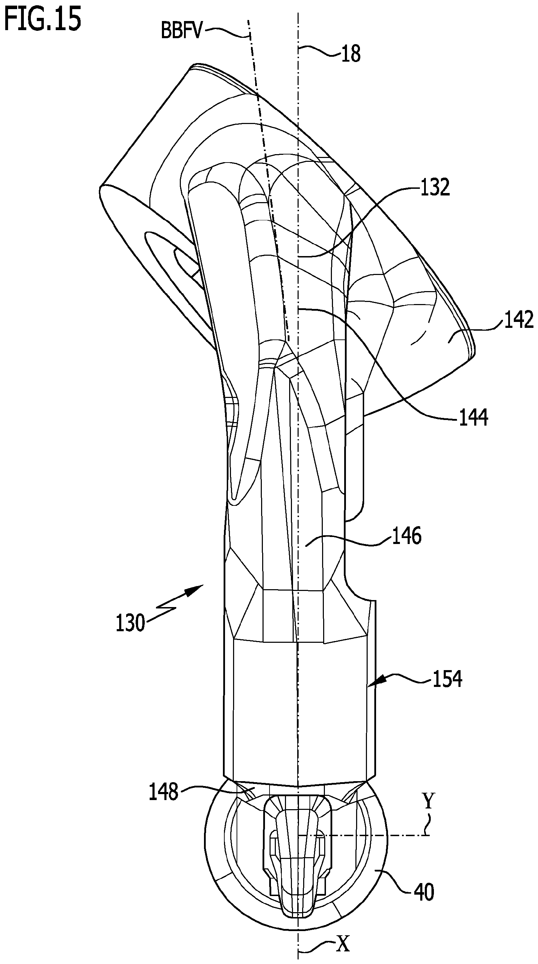

Ein beispielhafter Verlauf der Vertikal-Biegebewegungsfläche BBFV bei Belastung durch die Vertikalkraft FZ in Schwerkraftrichtung FZ ist beispielsweise in Fig. 15 dargestellt.

Damit führt die Belastung des Haltearms 130 mit der Vertikalkraft FZ in Schwerkraftrichtung in gleicher Weise wie beim ersten und zweiten Ausführungsbeispiel zu einer Biegebelastung im Haltearmabschnitt 60.

Die Anordnung des Haltearmabschnitts 60 zur Erfassung der reversiblen Deformationen desselben erfolgt bei dem Haltearm 130 in dem Zwischenstück 146, da sich dieser zwischen den Bogenstücken 144 und 148 mit einer nennenswerten Komponente parallel zur horizontalen Längsrichtung X erstreckt, in welcher die horizontale Längskraft FX wirkt, so dass in dem Haltearmabschnitt 60 parallel zur horizontalen Längsrichtung X verlaufende Dehnungen auftreten.

Im Gegensatz zum ersten und zweiten Ausführungsbeispiel führt jedoch aufgrund der unterschiedlichen geometrischen Gestaltung des Haltearms 130 eine horizontale Längskraft FX nicht ausschließlich zu reinen Materialzugspannungen MZSx in dem Haltearmabschnitt 60, sondern zusätzlich noch zu einer Materialbiegespannung MBSx, da die horizontale Längskraft FX mit einem Hebelarm H1 auf den Haltearmabschnitt 60 einwirkt und der Halteabschnitt 60 außerdem wieder über den Hebelarm H2 auf den Schwenklagerkörper 142 einwirkt, der letztlich den Haltearm 130 fixiert.

Wie in Fig. 14 dargestellt, hat somit im Gegensatz zum ersten und zweiten Ausführungsbeispiel die horizontale Längskraft FX zur Folge, dass in dem Haltearmabschnitt 60 im Bereich der jeweiligen Querschnittsflächen QF sowohl Materialzugspannungen MZSx auftreten, die über den gesamten Querschnitt dasselbe Vorzeichen aufweisen, als auch Materialbiegespannungen MBSx, die auf der einen Seite der Vertikal-Neutralreferenzfläche NRFV ein anderes Vorzeichen aufweisen als auf der gegenüberliegenden Seite.

Dies hat zur Folge, dass sich bei der horizontalen Längskraft FX in dem Haltearmabschnitt 60 die Materialzugspannungen MZSx und die Materialbiegespannungen MBSx addieren und somit überlagern.

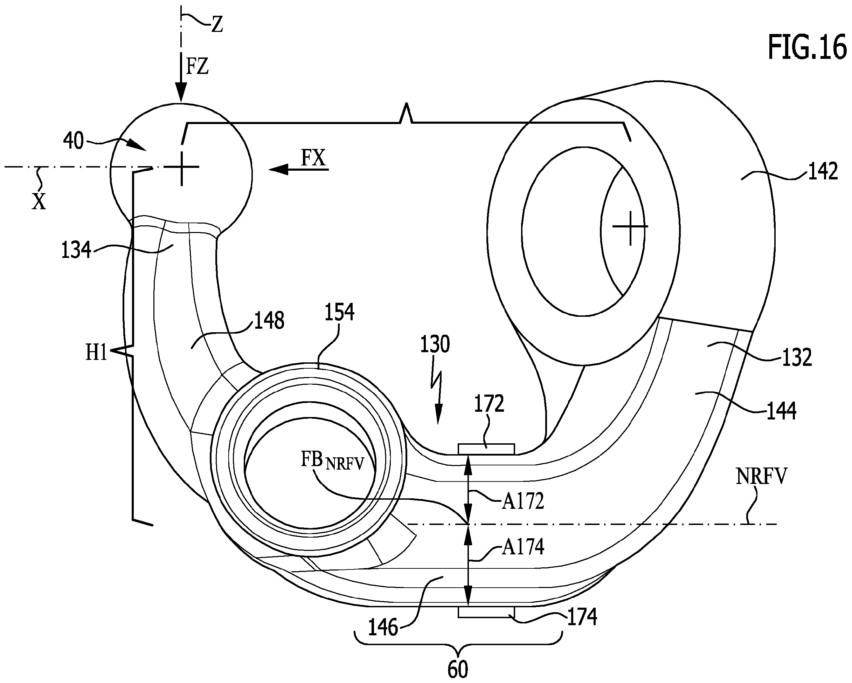

Zum Erfassen der verschiedenen Materialbiegespannungen MBSz und MBSx sowie auch der Materialzugspannungen MZSx sind, wie beispielsweise in Fig. 16 dargestellt, beiderseits des begrenzten Flächenbereichs FB_{NRFV} der Vertikal-Neutralreferenzfläche NRFV Dehnungssensoren 172 und 174 vorgesehen, die beispielsweise unmittelbar auf Außenflächen des Zwischenstücks 146 aufliegen und somit beiderseits der Vertikal-Neutralreferenzfläche NRFV die auftretenden Dehnungen erfassen.

Vorzugsweise sind dabei die Dehnungssensoren 172 und 174 in Abständen A172 und A174 von der Neutralreferenzfläche NRFZ angeordnet, die näherungsweise gleich groß sind, vorzugsweise so groß sind, dass der eine der Abstände A172, A174 weniger als das 1,5-fache der Abstände A174 beziehungsweise A172 beträgt.

Das heißt, dass bei der Einwirkung der Vertikalkraft FZ einer der Dehnungssensoren 172, 174 eine Dehnung und der andere der Dehnungssensoren 174 beziehungsweise 172 eine Stauchung misst, je nachdem, ob die Vertikalkraft FZ in Schwerkraftrichtung oder in entgegengesetzt zur Schwerkraftrichtung wirkt.

Wirkt dagegen die horizontale Längskraft FX auf das Element 40, so misst beispielsweise einer der Dehnungssensoren 172, 174 eine geringere Dehnung als der andere der Dehnungssensoren 172, 174, da sich auf die zu messenden Dehnungen die Materialzugspannungen MZSx und die Materialbiegespannungen MBSx in Summe auswirken.

Bei dem dritten Ausführungsbeispiel besteht somit ebenfalls die Möglichkeit, mit der Auswerteeinheit AU aus den Signalen der Dehnungssensoren 172, 174 im statischen Zustand, das heißt nicht im Fahrbetrieb, die Kraft FZ und somit die Stützlast, zu ermitteln, und im Fahrbetrieb bei Kenntnis der Stützlast FZ, die Zugkraft FX und bei Berücksichtigung der mit dem Beschleunigungssensor BSH ermittelten Beschleunigung in der horizontalen Längsrichtung X die Masse des Anhängers oder der Lastenträgereinheit zu ermitteln.

Bei dem dritten Ausführungsbeispiel sind ferner diejenigen Elemente, die mit denen der voranstehenden Ausführungsbeispiele identisch sind, mit denselben Bezugszeichen versehen, so dass auf die Ausführungen zu den voranstehenden Ausführungsbeispielen Bezug genommen werden kann.

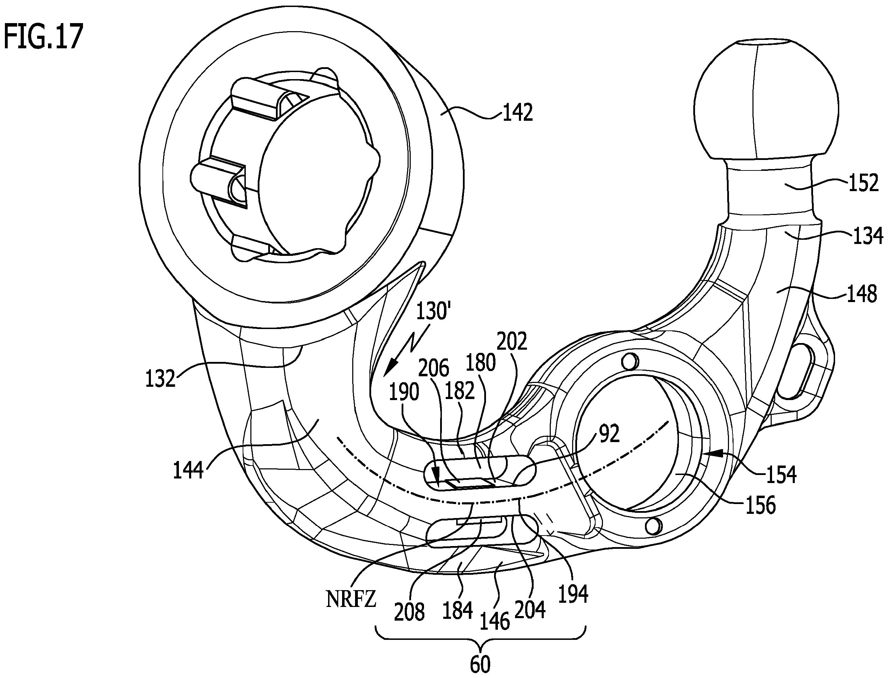

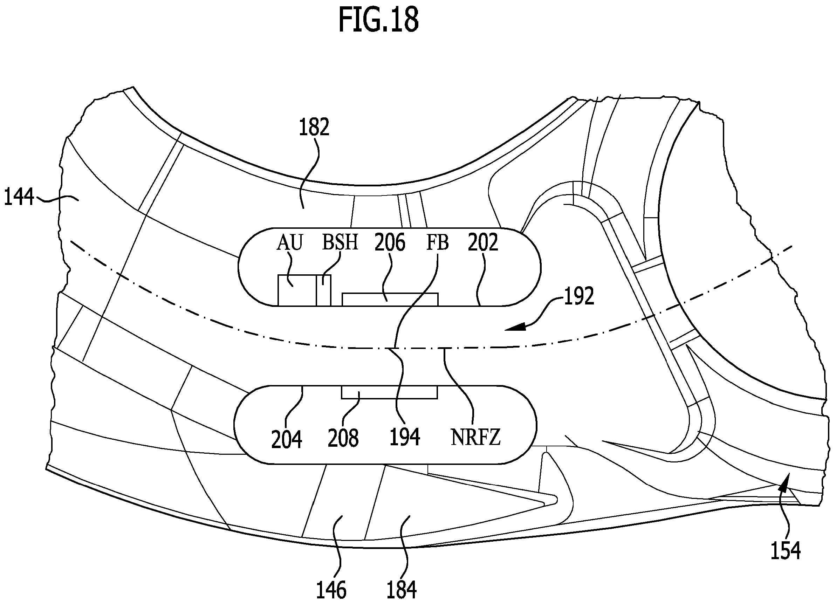

Bei einem vierten Ausführungsbeispiel der erfindungsgemäßen Lösung, dargestellt in den Fig. 17 und 18 ist ähnlich wie beim zweiten Ausführungsbeispiel in dem den Haltearmabschnitt 60 bildenden Zwischenstück 146 ein sich parallel zur Vertikal-Neutralreferenzfläche NRFV erstreckender und den Haltearmabschnitt 60 durchsetzender Durchbruch 180 vorgesehen, welcher durch einen Obergurt 182 und einen Untergurt 184 begrenzt ist und in welchem eine Sensoreinheit 190 angeordnet ist, die einen Sensorträger 192 aufweist, der in gleicher Weise wie beim zweiten Ausführungsbeispiel in einem mittigen Volumenbereich 194 von der Vertikal-Neutralreferenzfläche NRFV durchsetzt ist.

Der Sensorträger 192 trägt dabei auf Sensorträgerflächen 202 und 204 angeordnete Dehnungssensoren 206 und 208, die in gleicher Weise wie beim zweiten Ausführungsbeispiel in der Lage sind, die in dem Sensorträger 192 auftretenden Materialspannungen MBSz, MBSx und MZSx über die am Sensorträger 192 im Bereich der Sensorträgerflächen 102 und 104 auftretenden Dehnungen oder Stauchungen zu umfassen.

In diesem Fall ist ebenfalls der Sensorträger 192 unmittelbar mit dem Haltearmabschnitt 60 dadurch gekoppelt, dass der Sensorträger 192 ein einstückig mit dem übrigen Haltearmabschnitt 60 verbundenes Teil ist, so dass sämtliche reversiblen Deformationen des Haltearmbereich 60 sich qualitativ auf den Sensorträger 192 übertragen und somit im Sensorträger 192 qualitativ dieselben Dehnungen und Stauchungen durch die Dehnungssensoren 202 und 204 erfasst werden können.

Mit den Dehnungssensoren 206, 208 lässt sich somit beispielsweise bei einer statischen Belastung mit der Kraft FZ diese bestimmen, wobei im Fall der erfindungsgemäßen Vorrichtung die Kraft FZ eine Stützlast eines Anhängers oder einer Lastenträgereinheit repräsentiert, die auf das Element 40 des Haltearms 130' wirkt.

Bei Einwirkung der horizontalen Längskraft FX treten überall am Haltearmabschnitt 60 dieselben Dehnungen auf, so dass die Dehnungssensoren 206, 208 alle im Wesentlichen dieselben Materialbiegespannungen MZS erfassen.

Eine derartige horizontale Längskraft FX repräsentiert insbesondere bei der erfindungsgemäßen Vorrichtung eine Zugkraft beim Fahrbetrieb des Kraftfahrzeugs, die auf das Element 40 wirkt, wobei sich aus dieser Zugkraft bei Kenntnis der Beschleunigung die Masse des auf das Element 40 wirkenden Anhängers oder der auf das Element 40 wirkenden Lastenträgereinheit ermitteln lässt.

Bei dem vierten Ausführungsbeispiel der erfindungsgemäßen Lösung ist insbesondere ebenfalls eine Auswerteeinheit AU auf dem Sensorträger 192 vorgesehen, welche die Signale der Dehnungssensoren 206, 208 erfasst und daraus die Stützlast FZ auf dem Element 40 im Stillstand des Kraftfahrzeugs bestimmt, beispielsweise durch Heranziehen einer Tabelle, welche die Signale der Dehnungssensoren 206, 208 einer Stützlast zuordnet, und danach im Fahrbetrieb unter Berücksichtigung der gemessenen Stützlast FZ die Zugkraft FX bestimmt, beispielsweise ebenfalls durch Heranziehen einer Tabelle, welche die Werte für die Stützlast und die Signale der Dehnungssensoren im Fahrbetrieb mit einem Wert für die Zugkraft verknüpft.

Ferner ist zusätzlich in der Auswerteeinheit AU ein die Beschleunigung in der horizontalen Längsrichtung X erfassender Beschleunigungssensor BSH vorgesehen, so dass die Auswerteeinheit AU auch in der Lage ist, die Masse eines an dem Element 40 angreifenden Anhängers oder einer am Element 40 gehaltenen Lastenträgereinheit zu ermitteln.

Bei dem vierten Ausführungsbeispiel sind ferner diejenigen Elemente, die mit denen der voranstehenden Ausführungsbeispiele identisch sind, mit denselben Bezugszeichen versehen, so dass auf die Ausführungen zu den voranstehenden Ausführungsbeispielen Bezug genommen werden kann.

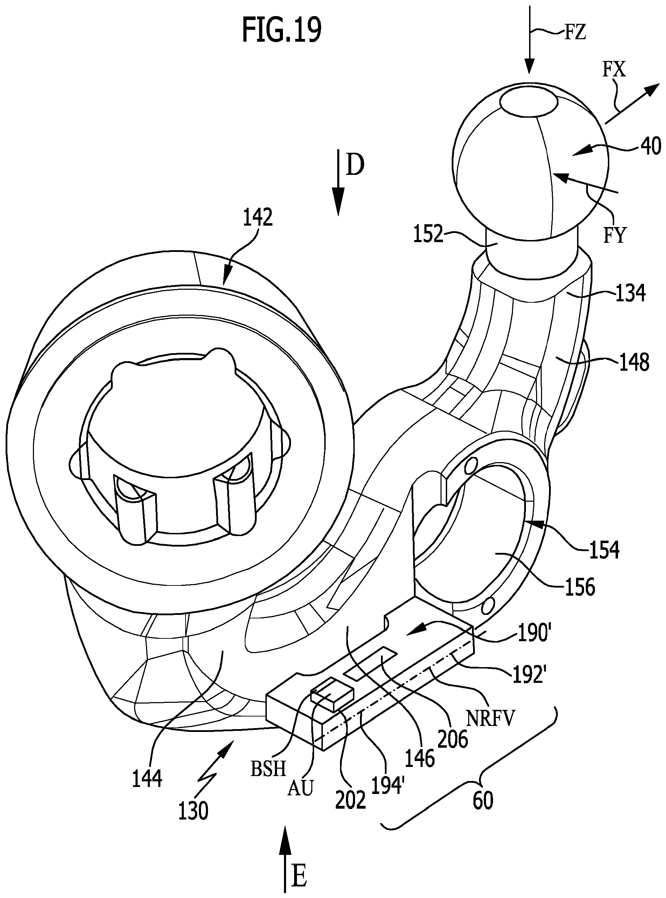

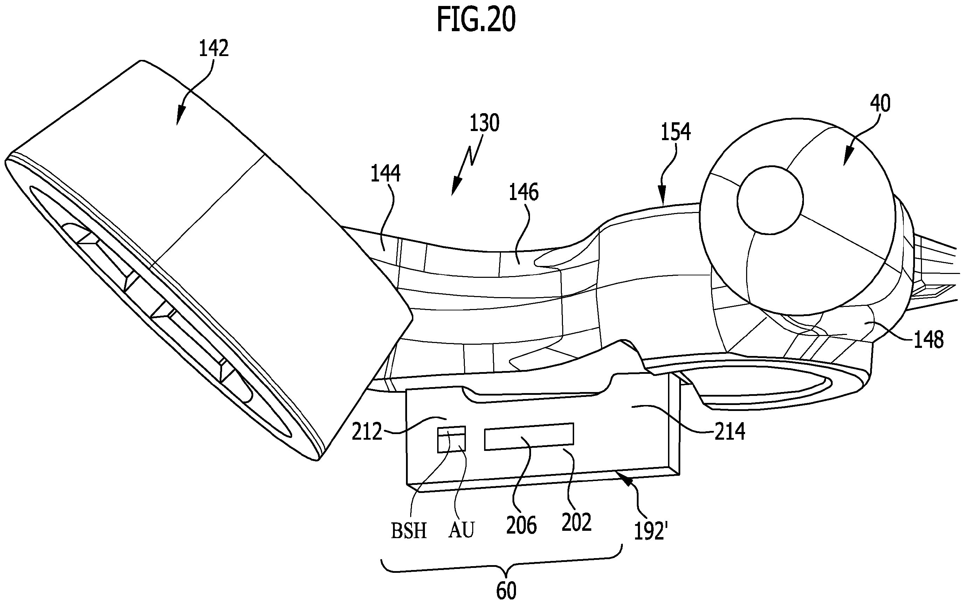

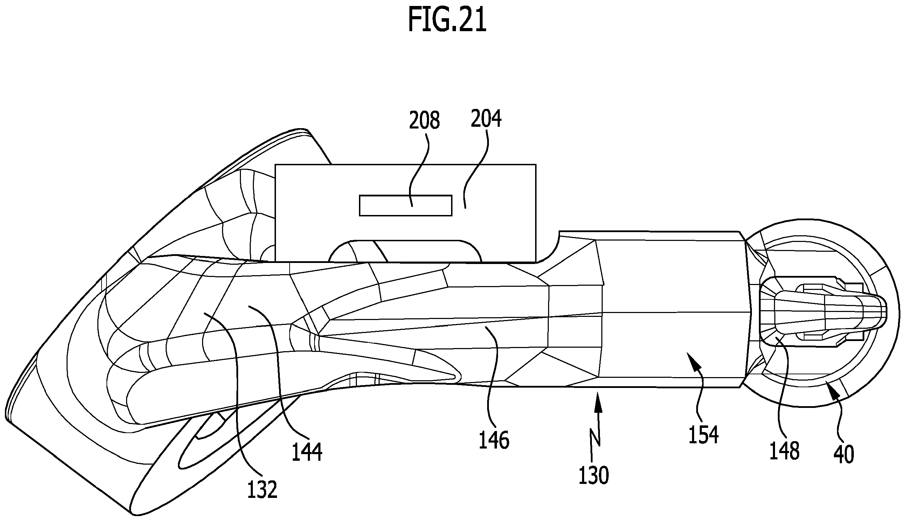

Bei einem fünften Ausführungsbeispiel, dargestellt in den Fig. 19 bis 21 ist der Haltearm 130' im Prinzip in gleicher Weise ausgebildet wie bei dem dritten Ausführungsbeispiel, allerdings ist an dem den Haltearmabschnitt 60 umfassenden Zwischenstück 146 die Sensoreinheit 190' mit dem Sensorträger 192' seitlich des Zwischenstücks 146 angeordnet, aber ebenfalls so, dass die Vertikal-Neutralreferenzfläche NRFV den Sensorträger 192' in einem mittigen Volumenbereich 194' durchsetzt und somit auch dieser Sensorträger 192' Sensorträgerflächen 202 und 204 aufweist, die auf gegenüberliegenden Seiten der Neutralreferenzfläche NRFZ in gleicher Weise wie beim zweiten und vierten Ausführungsbeispiel angeordnet sind, so dass auf diesen Sensorträgerflächen 202 und 204 angeordnete Dehnungssensoren 206 und 208 ebenfalls Dehnungen und Stauchungen des Sensorträgers 192' in derselben Größenanordnung erfassen.

Vorzugsweise ist dabei der Sensorträger 192' an seinen Endbereichen 212 und 214 mit dem Zwischenstück 146 fest verbunden, so dass der Sensorträger 192 in gleicher Weise wie beim zweiten und vierten Ausführungsbeispiel qualitativ dieselben reversiblen Deformationen erfährt wie das den Haltearmabschnitt 60 umfassende Zwischenstück 144.

Diese Lösung hat den Vorteil, dass keine Veränderung des Haltearms 130' selbst, beispielsweise durch Einbringen des Durchbruchs 80, erforderlich ist, sondern dass der Haltearm 130' in seinem Haltearmabschnitt 60 selbst unverändert ausgebildet werden kann, und leidglich an beispielsweise einer Seite oder auch gegenüberliegenden Seiten des Haltearmabschnitts 60 der Sensorträger 192' so montiert werden kann, dass die Vertikal-Neutralreferenzfläche NRFV einen mittigen Volumenbereich 194' desselben durchsetzt.

Damit sind auch bei einem derartigen Sensorträger 192' mit den auf den Sensorträgerflächen 202 und 204 angeordneten Dehnungssensoren 206 und 208 die durch eine Vertikalkraft FZ und eine horizontale Längskraft FX entstehenden reversiblen Deformationen des Haltearms 130' als Dehnungen erfassbar.

Mit den Dehnungssensoren 206, 208 lässt sich somit beispielsweise bei einer statischen Belastung mit der Kraft FZ diese bestimmen, wobei im Fall der erfindungsgemäßen Vorrichtung die Kraft FZ eine Stützlast eines Anhängers oder einer Lastenträgereinheit repräsentiert, die auf das Element 40 des Haltearms 130 wirkt.

Bei Einwirkung der horizontalen Längskraft FX treten überall am Haltearmabschnitt 60 dieselben Dehnungen auf, so dass die Dehnungssensoren 206, 208 alle im Wesentlichen dieselben Materialbiegespannungen MZS erfassen.

Eine derartige horizontale Längskraft FX repräsentiert insbesondere bei der erfindungsgemäßen Vorrichtung eine Zugkraft beim Fahrbetrieb des Kraftfahrzeugs, die auf das Element 40 wirkt, wobei sich aus dieser Zugkraft bei Kenntnis der Beschleunigung die Masse des auf das Element 40 wirkenden Anhängers oder der auf das Element 40 wirkenden Lastenträgereinheit ermitteln lässt.

Bei dem fünften Ausführungsbeispiel der erfindungsgemäßen Lösung ist insbesondere eine Auswerteeinheit AU auf dem Sensorträger 192' vorgesehen, welche die Signale der Dehnungssensoren 206, 208 erfasst und daraus die Stützlast FZ auf dem Element 40 im Stillstand des Kraftfahrzeugs bestimmt, beispielsweise durch Heranziehen einer Tabelle, welche die Signale der Dehnungssensoren einer Stützlast zuordnet, und danach im Fahrbetrieb unter Berücksichtigung der gemessenen Stützlast FZ die Zugkraft FX bestimmt, beispielsweise ebenfalls durch Heranziehen einer Tabelle, welche die Werte für die Stützlast und die Signale der Dehnungssensoren im Fahrbetrieb mit einem Wert für die Zugkraft verknüpft.

Ferner ist zusätzlich in der Auswerteeinheit AU ein die Beschleunigung in der horizontalen Längsrichtung X erfassender Beschleunigungssensor BSH vorgesehen, so dass die Auswerteeinheit AU auch in der Lage ist, die Masse eines an dem Element 40 angreifenden Anhängers oder einer am Element 40 gehaltenen Lastenträgereinheit zu ermitteln.

Bei dem fünften Ausführungsbeispiel sind ferner diejenigen Elemente, die mit denen der voranstehenden Ausführungsbeispiele identisch sind, mit denselben Bezugszeichen versehen, so dass auf die Ausführungen zu den voranstehenden Ausführungsbeispielen Bezug genommen werden kann.

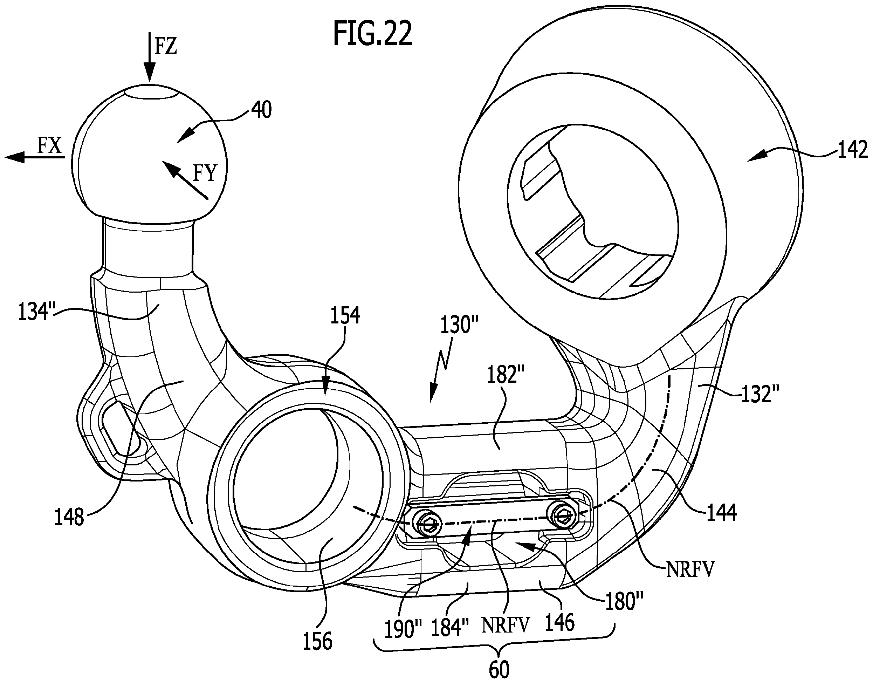

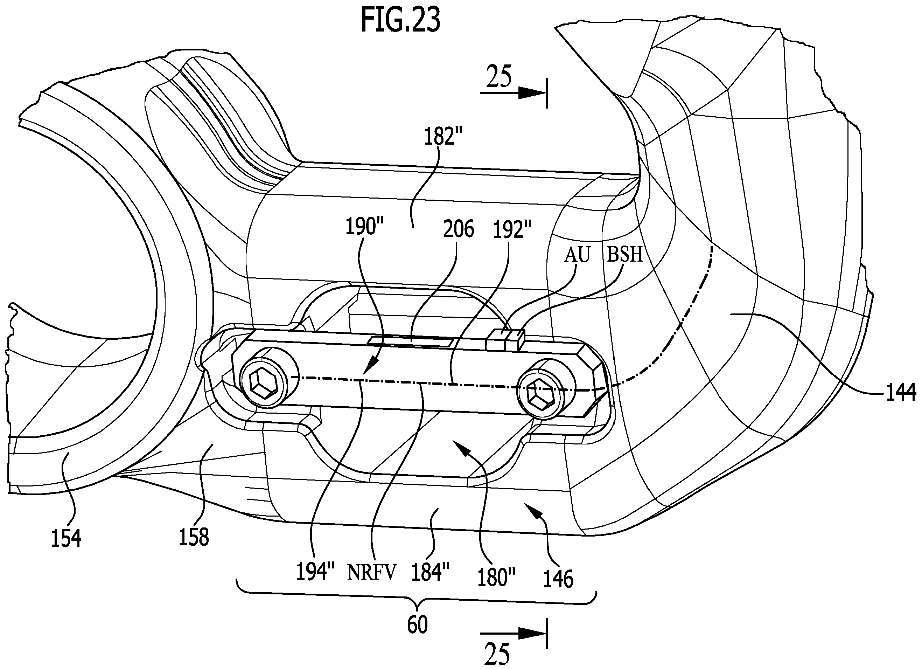

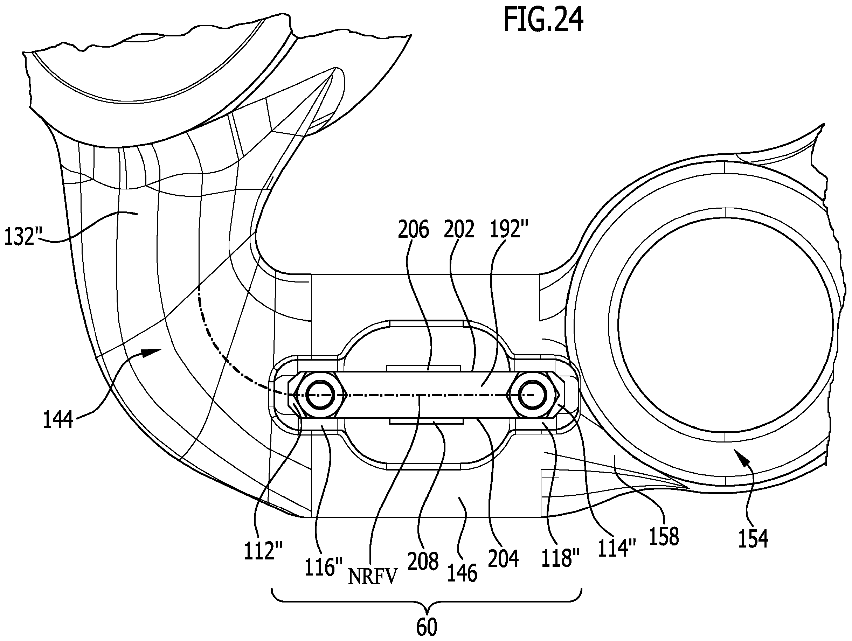

Bei einem sechsten Ausführungsbeispiel, dargestellt in den Fig. 22 bis 25 sind diejenigen Elemente, die mit denen der voranstehenden Ausführungsbeispiele identisch sind, mit denselben Bezugszeichen versehen, so dass bezüglich der Erläuterungen dieser Elemente vollinhaltlich auf die Ausführungen zu den voranstehenden Ausführungsbeispielen Bezug genommen werden kann.

Bei dem sechsten Ausführungsbeispiel ist der Haltearm 130" im Bereich des Zwischenstücks 146, welches den Haltearmabschnitt 60 bildet, wiederum mit einem sich parallel zur Vertikal-Neutralreferenzfläche NRFV erstreckenden Durchbruch 180" versehen, welcher den gesamten Haltearmabschnitt 60 in Richtung parallel zur Vertikal-Neutralreferenzfläche NRFV durchsetzt, und zwar so, dass die Vertikal-Neutralreferenzfläche NRFV durch den Durchbruch 180" hindurchverläuft und beiderseits des Durchbruchs 180" der Obergurt 182" und der Untergurt 184" die notwendige Stabilität des Zwischenstücks 146 bewirken.

In den Durchbruch 180" sind von beiden Seiten Sensoreinheiten 190" eingesetzt, von denen jede einen Sensorträger 192" umfasst, wobei der Sensorträger 192" ebenfalls so angeordnet ist, dass ein mittiger Volumenbereich 194" von der Vertikal-Neutralreferenzfläche NRFV durchsetzt wird.

Ferner ist jeder der Sensorträger 192" mit Sensorträgerflächen 202 und 204 versehen, die im Wesentlichen im gleichen Abstand auf einander gegenüberliegenden Seiten der Vertikal-Neutralreferenzfläche NRFV angeordnet sind und somit in der Lage sind, die reversiblen Deformationen des Sensorträgers 192" zu erfassen.

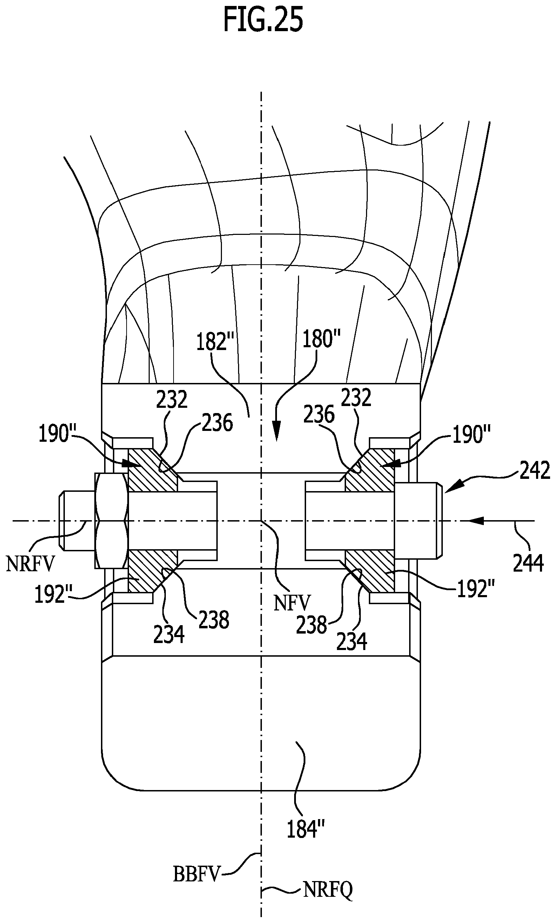

Eine lösbare Verbindung des Sensorträgers 192" mit dem Haltearmabschnitt 60 erfolgt beispielsweise durch Verschrauben von Endbereichen 112" und 114" des jeweiligen Sensorträgers 192" mit dem Haltearmabschnitt 60, wobei, wie in Fig. 25 dargestellt, die Sensorträger 192" Formschlussflächen 232, 234 aufweisen, die an entsprechenden Aufnahmeflächen 236, 238 anlegbar sind, um an den jeweiligen Endbereichen 112" und 114" der Sensorträger 192" eine formschlüssige Verbindung zu dem Haltearmabschnitt 60 herzustellen.

Die Formschlussflächen 232 und 234 und die Aufnahmeflächen 236 und 238 sind dabei so angeordnet, dass die Endbereiche 112" und 114" der Sensorträger 292" durch eine Schraubverbindung 242 an dem Haltearmabschnitt 60 fixierbar sind.

Beispielsweise bewirkt die Schraubverbindung 242 dass die Endbereiche 212" und 114" der Sensorträger 192" in einer Einsetzrichtung 244, die beispielsweise parallel zur Vertikal-Neutralreferenzfläche NRFV verläuft, in die Ausnehmungen 116" und 118" gedrückt werden, wobei die Aufnahmeflächen 236 und 238 jeweils schräg zur Einsetzrichtung 244 und relativ zueinander konisch oder V-förmig verlaufen.

Ferner haben die Formschlussflächen 232 und 234 eine ähnlich schräg zur Einsetzrichtung 244 und V-förmig zueinander verlaufende Ausrichtung, so dass die Schraubverbindung 242 eine drehfeste formschlüssige Verbindung zwischen den Ausnehmungen 116", 118" und den jeweiligen Endbereichen 112" beziehungsweise 114" schafft, um die reversiblen Deformationen des Haltearmabschnitts 60 zumindest qualitativ auf den jeweiligen Sensorträger 192" zu übertragen.

Bei diesem Ausführungsbeispiel sind die Sensoreinheiten 190" separat herstellbare Einheiten, die beispielsweise bei einer Beschädigung ausgetauscht werden können und die auch bei verschieden geformten Haltearmen 130" eingesetzt werden können.

Bei diesem Ausführungsbeispiel ist der Sensorträger 192" aus einem Material, das denselben Wärmeausdehnungskoeffizienten wie das Material des Haltearmabschnitts 60 aufweist und Spannungen im Sensorträger 192" bei Temperaturänderungen zu vermeiden.

Insbesondere ist der Sensorträger 192" aus demselben Material wie der Haltearmabschnitt 60 hergestellt.

Die Tatsache, dass bei diesem Ausführungsbeispiel zwei Sensorträger 192" jeweils an einander gegenüberliegenden Seiten, jedoch insbesondere gegenüber einer Außenkontur des Haltearmabschnitts 60 zurückgesetzt angeordnet sind, erlaubt es, mit den Dehnungssensoren 206 und 208 dieser Sensoreinheiten 190" auf einander gegenüberliegenden Seiten redundante Messungen durchzuführen.

Darüber hinaus sind bei diesem Ausführungsbeispiel die Sensoreinheiten 190" auf einander gegenüberliegenden Seiten der Quer-Neutralreferenzfläche NRFQ angeordnet, so dass auch die Möglichkeit besteht, durch unterschiedliche von der einen Sensoreinheit 190" erfasste Dehnungen in Bezug auf die andere Sensoreinheit 190" durch die horizontale Querkraft FY erzeugten reversiblen Deformationen im Haltearmabschnitt 60 zu erfassen.

Mit den Dehnungssensoren 206, 208 auf den beiden Sensorträgern 192" lässt sich somit beispielsweise bei einer statischen Belastung mit der Kraft FZ diese bestimmen, wobei im Fall der erfindungsgemäßen Vorrichtung die Kraft FZ eine Stützlast eines Anhängers oder einer Lastenträgereinheit repräsentiert, die auf das Element 40 des Haltearms 30 wirkt.

In vergleichbarer Weise sind somit auch die jeweiligen Dehnungssensoren 206, 208 der beiden im Abstand voneinander angeordneten Sensoreinheiten 190" auf einander gegenüberliegenden Seiten der Quer-Neutralreferenzebene NRFQ angeordnet und relativ zu ein einem Flächenbereich FB_{NRFQ} so angeordnet, dass die jeweiligen Dehnungssensoren 206, 208 der beiden Sensoreinheiten 190" bei einer senkrechten Projektion auf die Quer-Neutralreferenzfläche NRFQ innerhalb des Flächenbereichs FB_{NRFQ} liegen, wobei der Flächenbereich FB_{NRFQ} in seinen in dem Flächenbereich FB_{NRFQ} liegenden Ausdehnungsrichtungen jeweils eine Ausdehnung aufweist, die maximal der 1,5-fachen Ausdehnung der Dehnungssensoren 206, 208 parallel zu diesen Richtungen entspricht.

Außerdem liegt auch eine senkrechte Projektion der Dehnungssensoren 206 und 208 jeder der Sensoreinheiten 190" innerhalb des Flächenbereichs FB_{NRFQ}.

Durch die Anordnung der Dehnungssensoren 206, 208 der beiden Sensoreinheiten 190" in ungefähr gleichem Abstand von der Quer-Neutralreferenzfläche NRFQ bewirkt eine Querbiegebelastung BQ ebenfalls bei den jeweiligen Dehnungssensoren 206, 208 der beiden Sensoreinheiten 190" Signale mit umgekehrtem Vorzeichen, jedoch in der gleichen Größenordnung, vorzugsweise in ungefähr gleicher Größe.

Die durch die Sensoren 206, 208 der beiden Sensoreinheiten 190" ermittelte horizontale Querkraft FY repräsentiert insbesondere bei der erfindungsgemäßen Vorrichtung einer Querbeschleunigung auf das Element 40, die beispielsweise während des Fahrbetriebs des Kraftfahrzeugs bei Schlingerbewegungen des Kraftfahrzeugs oder des Kraftfahrzeug mit dem Anhänger oder mit der Lastenträgereinheit auftreten.

Bei Einwirkung der horizontalen Längskraft FX treten überall am Haltearmabschnitt 60 dieselben Dehnungen auf, so dass die Dehnungssensoren 206, 208 der beiden Sensoreinheiten 190" alle im Wesentlichen dieselben Materialzugspannungen MZSₓ kombiniert mit den durch den Hebelarm H1 bedingten Materialbiegespannungen MBSₓ erfassen.

Eine derartige horizontale Längskraft FX repräsentiert insbesondere bei der erfindungsgemäßen Vorrichtung eine Zugkraft beim Fahrbetrieb des Kraftfahrzeugs, die auf das Element 40 wirkt, wobei sich aus dieser Zugkraft bei Kenntnis der Beschleunigung die Masse des auf das Element 40 wirkenden Anhängers oder der auf das Element 40 wirkenden Lastenträgereinheit ermitteln lässt.

Bei der erfindungsgemäßen Lösung ist insbesondere eine Auswerteeinheit AU auf einem der Sensorträger 190" vorgesehen, welche die Signale der Dehnungssensoren 206, 208 der beiden Sensoreinheiten 190" erfasst und daraus die Stützlast FZ auf dem Element 40 im Stillstand des Kraftfahrzeugs bestimmt, beispielsweise durch Heranziehen einer Tabelle, welche die Signale der Dehnungssensoren einer Stützlast zuordnet, und danach im Fahrbetrieb unter Berücksichtigung der gemessenen Stützlast FZ die Zugkraft FX und gegebenenfalls die Querkraft FY bestimmt, beispielsweise ebenfalls durch Heranziehen einer Tabelle, welche die Werte für die Stützlast und die Signale der Dehnungssensoren 206, 208 im Fahrbetrieb mit einem Wert für die Zugkraft verknüpft.

Außerdem ist zusätzlich in der Auswerteeinheit AU ein die Beschleunigung in der horizontalen Längsrichtung X erfassender Beschleunigungssensor BSH vorgesehen, so dass die Auswerteeinheit AU auch in der Lage ist, die Masse eines an dem Element 40 angreifenden Anhängers oder einer am Element 40 gehaltenen Lastenträgereinheit zu ermitteln.

## Patentansprüche

1. Heckseitig an einer Kraftfahrzeugkarosserie (14) montierbare Vorrichtung (20, 30, 40) zum Ziehen eines Anhängers und/oder Halten einer Lastenträgereinheit,
umfassend einen mit einem ersten Endbereich (32, 132) mit der Kraftfahrzeugkarosserie (14) verbundenen Haltearm (30, 130), insbesondere einen Kugelhals, der an einem zweiten Endbereich (34, 134) mit einem Element (40), insbesondere eine Kupplungskugel, zum Anhängen des Anhängers und/oder zum Fixieren der Lastenträgereinheit versehen ist, und ferner umfassend Sensoren zum Erfassen von durch Belastungen des Haltearms (30, 130) bedingten reversiblen Deformationen des Haltearms (30, 130),
wobei einem Haltearmabschnitt (60) des Haltearms (30, 130) durch dessen reversible Deformationen beeinflusste Dehnungssensoren (72, 74, 76, 78, 106, 108, 126, 128, 172, 174, 206, 208) zugeordnet sind, und **dadurch gekennzeichnet, dass**
zur Erfassung von mindestens einer ausgewählten Biegebelastung, die durch eine Kraft auf das Element (40) in vertikaler Richtung bedingt ist, mindestens ein Dehnungssensor (72, 76, 106, 126, 172, 206) auf einer Seite und mindestens ein Dehnungssensor (74, 78, 108, 128, 174, 208) auf einer gegenüberliegenden Seite eines Flächenbereichs (FB) einer der ausgewählten Biegebelastung zugeordneten Vertikal-Neutralreferenzfläche (NRFV) angeordnet sind, wobei die Vertikal-Neutralreferenzfläche (NRFV) durch eine Vertikal-Neutralfaser (NFV) hindurch verläuft und senkrecht zu einer sich bei der vertikalen Biegebelastung (BV) ausbildenden Biegebewegungsfläche verläuft, dass die Dehnungssensoren (72, 74, 76, 78, 106, 108, 126, 128, 172, 174, 206,208) jeweils in einem Abstand von diesem Flächenbereich (FB) angeordnet sind, dass die Dehnungssensoren (72, 74, 76, 78, 106, 108, 126, 128, 172, 174, 206, 208) ungefähr parallel zu dem Flächenbereich (FB) der Neutralreferenzfläche (NRFV, NRFQ) ausgerichtet sind und dass die Dehnungssensoren (72, 74, 76, 78, 106, 108, 126, 128, 172, 174, 206, 208) derart angeordnet und ausgerichtet sind, dass sie eine horizontale Zugbelastung durch eine horizontale Längskraft (FX) auf das Element (40) erfassen.

2. Vorrichtung nach Anspruch 1, **dadurch gekennzeichnet, dass** jeder Biegebelastung eine Neutralreferenzfläche (NRFV, NRFQ) zugeordnet ist.

3. Vorrichtung nach Anspruch 1 oder 2, **dadurch gekennzeichnet, dass** eine senkrechte Projektion der auf einander gegenüberliegenden Seiten der Neutralreferenzfläche (NRFV, NRFQ) angeordneten Dehnungssensoren (72, 74, 76, 78, 106, 108, 126, 128, 172, 174, 206, 208) auf den Flächenbereich (FB) innerhalb dieses Flächenbereichs (FB) liegt, dass insbesondere der Flächenbereich (FB) in jeder seiner Ausdehnungsrichtungen eine Ausdehnung aufweist, die maximal das Doppelte der Ausdehnung jedes der Dehnungssensoren (72, 74, 76, 78, 106, 108, 126, 128, 172, 174, 206, 208) parallel zu dieser Ausdehnungsrichtung ist.

4. Vorrichtung nach einem der voranstehenden Ansprüche, **dadurch gekennzeichnet, dass** die auf den einander gegenüberliegenden Seiten der jeweiligen Neutralreferenzfläche angeordneten Dehnungssensoren (72, 74, 76, 78, 106, 108, 126, 128, 172, 174, 206, 208) in derartigen Abständen von der jeweiligen Neutralreferenzfläche (NRFV, NRFQ) angeordnet sind, dass die Abstände des mindestens einen Dehnungssensors (106, 126, 206) auf einer Seite von dem Flächenbereich (FB) der Neutralreferenzfläche (NRFV, NRFQ) im Bereich von dem 0,5-fachen bis zum 1,5-fachen des Abstands des mindestens einen Dehnungssensors (108, 128, 208) auf der gegenüberliegenden Seite von dem Flächenbereich (FB) liegt.

5. Vorrichtung nach einem der voranstehenden Ansprüche, **dadurch gekennzeichnet, dass** die Dehnungssensoren (106, 108, 126, 128, 206, 208) auf ungefähr parallel zu dem Flächenbereich (FB) verlaufenden Sensorträgerflächen (102, 104, 122, 124, 202, 204) angeordnet und mit diesen verbunden sind.

6. Vorrichtung nach einem der voranstehenden Ansprüche, **dadurch gekennzeichnet, dass** insbesondere der Haltearmabschnitt (60) derart festgelegt ist, dass die Neutralreferenzfläche (NRFV, NRFQ) dieses Haltearmabschnitts (60) eine Komponente in einer horizontalen Längsrichtung aufweist, und/oder dass insbesondere die Neutralreferenzfläche (NRFV, NRFQ) dieses Halteabschnitts (60) im Wesentlichen parallel zu der horizontalen Längsrichtung verläuft, bei welchen der Verlauf der Neutralreferenzfläche (NRFV, NRFQ) in einem Winkel von weniger als ± 30° von einem exakt parallelen Verlauf zu der horizontalen Längsrichtung abweicht.

7. Vorrichtung nach einem der voranstehenden Ansprüche, **dadurch gekennzeichnet, dass** eine Sensoreinheit (90, 190) einen Sensorträger (92, 192) aufweist, der auf einander gegenüberliegenden Seiten mit Sensorträgerflächen (102, 104, 122, 124, 202, 204) versehen ist, auf denen Dehnungssensoren (106, 108, 126, 128, 206, 208) angeordnet und mit diesen verbunden sind und dass der Sensorträger (92, 192) mit dem deformierbaren Halteabschnitt (60) des Haltearms (30, 130) derart verbunden ist, dass der Sensorträger (92, 192) ein reversibles Deformationsverhalten zeigt, das qualitativ mit dem reversiblen Deformationsverhalten des Haltearmabschnitts (60) identisch ist, dass insbesondere der Sensorträger (92, 192) so relativ zum Haltearmabschnitt (60) angeordnet ist, dass eine zur Erfassung einer ausgewählten Biegebelastung eine dieser Biegebelastung zugeordnete Neutralreferenzfläche (NRFV, NRFQ) des Haltearmabschnitts (60) einen zwischen den Sensorträgerflächen (102, 104, 122, 124, 202, 204) liegenden Volumenbereich (94, 194) des Sensorträgers (92, 192) durchsetzt, dass insbesondere die Neutralreferenzfläche (NRFV, NRFQ) einen mittigen Volumenbereich (94, 194) des Sensorträgers (92, 192) durchsetzt, und/oder dass insbesondere sich der Sensorträger (92, 192) längs der Neutralreferenzfläche (NRFV, NRFQ) erstreckt, und/oder dass insbesondere die Sensorträgerflächen (102, 104, 122, 124, 202, 204) auf einander gegenüberliegenden Seiten einer Längsmittelachse (93) des Sensorträgers (92, 192) angeordnet sind, und/oder dass insbesondere die einander gegenüberliegenden Sensorträgerflächen (102, 104, 122, 124, 202, 204) jeweils Abstände von der Neutralreferenzfläche (NRFV, NRFQ) aufweisen, die sich um einen Faktor im Bereich von 0,5 bis 1,5 voneinander unterscheiden.

8. Vorrichtung nach Anspruch 7, **dadurch gekennzeichnet, dass** der Sensorträger (92, 192) auf das reversible Deformationsverhalten des Haltearmabschnitts (60) einen derart geringen Einfluss aufweist, dass die Größe der bei vorhandenem Sensorträger (92, 192) auftretenden reversiblen Deformationen des Haltearmabschnitts (60) mindestens das 0,90-fache der Größe der reversiblen Deformationen des Haltearmabschnitts (60) ohne den Sensorträger (92, 192) betragen.

9. Vorrichtung nach Anspruch 7 oder 8, **dadurch gekennzeichnet, dass** der Sensorträger (92, 192) einstückig mit dem Haltearmabschnitt (60) verbunden ist, und dass insbesondere der Sensorträger (92, 192) aus einem Material mit demselben Wärmeausdehnungskoeffizienten wie der Haltearmabschnitt (60) ist, mit dem dieser verbunden ist.

10. Vorrichtung nach Anspruch 7 oder 8, **dadurch gekennzeichnet, dass** der Sensorträger (92, 192) ein am Haltearmabschnitt (60) montiertes Bauteil ist, und dass insbesondere der Sensorträger (92, 192) aus einem Material mit demselben Wärmeausdehnungskoeffizienten wie der Haltearmabschnitt (60) ist, mit dem dieser verbunden ist.

11. Vorrichtung nach Anspruch 10, **dadurch gekennzeichnet, dass** der Sensorträger (92, 192) im Abstand voneinander angeordnete Endbereiche (112, 114) aufweist, und dass zwischen den Endbereichen (112, 114) die Sensorträgerflächen (102, 104, 122, 124, 202, 204) für die Dehnungssensoren (106, 108, 126, 128, 206, 208) liegen, dass insbesondere nur die Endbereiche (112, 114) des Sensorträgers (92, 192) in am Haltearmabschnitt (60) angeordneten Aufnahmen (116, 118) gehalten sind, welche die durch die Belastungen im Haltearmabschnitt (60) auftretenden reversiblen Deformationen auf den Sensorträger (92, 192) übertragen, dass insbesondere die Endbereiche (112, 114) in diese Endbereiche (112, 114) formschlüssig fixierende Aufnahmen (116, 118) im Haltearmabschnitt (60) eingreifen, die auf den Sensorträger (92, 192) die reversiblen Deformationen des die Aufnahmen (116, 118) umfassenden und sich außerdem zwischen den Aufnahmen (116, 118) erstreckenden Haltearmabschnitts (60) übertragen, und/oder dass insbesondere die Aufnahmen (116, 118) sich mit mindestens einer Komponente parallel zur jeweiligen Neutralreferenzfläche (NRFV, NRFQ) erstreckende und auf die Endbereiche (112, 114) wirkende Aufnahmeflächen (236, 238) aufweisen, und/oder dass insbesondere die Endbereiche (112, 114) sich mit mindestens einer Komponente parallel zur jeweiligen Neutralreferenzfläche (NRFV, NRFQ) erstreckende Formschlussflächen (232, 234) aufweisen.

12. Vorrichtung nach einem der Ansprüche 7 bis 11, **dadurch gekennzeichnet, dass** der Sensorträger (92, 192) sich, insbesondere mit seiner Längsmittelachse, mit mindestens einer Komponente in einer horizontalen Längsrichtung erstreckt, dass insbesondere der Sensorträger (92, 192) sich im Wesentlichen parallel zu der horizontalen Längsrichtung erstreckt.

13. Vorrichtung nach einem der Ansprüche 7 bis 11, **dadurch gekennzeichnet, dass** der Sensorträger (92, 192) in einer Richtung parallel zur jeweiligen Neutralreferenzebene (NRFV, NRFQ) versetzt neben dem Haltearmabschnitt (60) angeordnet ist, dass insbesondere der Sensorträger (92, 192) an einer Längsseite des Haltearmabschnitts (60) angeordnet ist.

14. Vorrichtung nach einem der Ansprüche 7 bis 11, **dadurch gekennzeichnet, dass** der Haltearmabschnitt (60) eine Ausnehmung (80, 180) aufweist und dass der Sensorträger (92, 192) in die Ausnehmung (80) des Haltearmabschnitts (60) eingreifend angeordnet ist.

15. Vorrichtung nach einem der Ansprüche 7 bis 14, **dadurch gekennzeichnet, dass** der Haltearmabschnitt (60), gemessen entlang der ausgewählten Neutralreferenzfläche (NRFV, NRFQ), einen Abstand von dem ersten Endbereich (32, 132) aufweist, der im Bereich vom 0,3-fachen bis zum 2-fachen des Abstands von dem zweiten Endbereich (34, 134) liegt, und/oder dass insbesondere zwischen einem den Haltearmabschnitt (60) umfassenden Zwischenbereich (146) des Haltearms (30, 130) und dem ersten Endbereich (32, 132) und/oder dem zweiten Endbereich (34, 134) des Haltearms (30, 130) ein Bogenstück (144, 148) vorgesehen ist, und/oder dass insbesondere der Haltearmabschnitt (60) in einem mittigen Bereich zwischen dem ersten Endbereich (32, 132) und dem zweiten Endbereich (34, 134) des Haltearms (30, 130) liegt.

16. Vorrichtung nach einem der voranstehenden Ansprüche, **dadurch gekennzeichnet, dass** eine Auswerteeinheit vorgesehen ist, welche die Signale der Dehnungssensoren (72, 74, 76, 78, 106, 108, 126, 128, 172, 174, 206, 208) auswertet, dass insbesondere die Auswerteeinheit (AU) die auf das Element (40) in vertikaler Richtung (Z) wirkende Kraft (FZ) ermittelt, und/oder dass insbesondere eine Auswerteeinheit eine horizontale Querkraft (FY) ermittelt, und/oder dass insbesondere die Auswerteeinheit (AU) eine horizontale Längskraft (FX) ermittelt.

17. Vorrichtung nach Anspruch 16, **dadurch gekennzeichnet, dass** der Auswerteeinheit (AU) ein Beschleunigungssensor (BSH) zugeordnet ist, dass insbesondere der Beschleunigungssensor (BSH) mindestens eine Beschleunigung in der horizontalen Längsrichtung (X) erfasst.

## Claims

1. A device (20, 30, 40) for pulling a trailer and/or retaining a load carrying unit, which device is mountable on the rear end of a motor vehicle body (14),
comprising a supporting arm (30, 130), in particular a ball neck, which is connected to the motor vehicle body (14) by a first end region (32, 132) and which is provided at a second end region (34, 134) with an element (40), in particular a coupling ball, for attaching the trailer and/or for fixing the load carrying unit, and furthermore comprising sensors for sensing reversible deformations of the supporting arm (30, 130) caused by loads on the supporting arm (30, 130),
wherein there are associated with a supporting arm portion (60) of the supporting arm (130, 130) strain sensors (72, 74, 76, 78, 106, 108, 126, 128, 172, 174, 206, 208) which are influenced by the reversible deformations of the supporting arm, and
**characterised in that**, for sensing at least one selected bending load, which is caused by a force on the element (40) in the vertical direction, at least one strain sensor (72, 76, 106, 126, 172, 206) is arranged on one side and at least one strain sensor (74, 78, 108, 128, 174, 208) is arranged on an opposite side of a plane region (FB) of a vertical neutral reference plane (NRFV) associated with the selected bending load, wherein the vertical neutral reference plane (NRFV) runs through a vertical neutral axis (NFV) and perpendicularly to a bending movement plane which is formed under the vertical bending load (BV), **in that** the strain sensors (72, 74, 76, 78, 106, 108, 126, 128, 172, 174, 206, 208) are each arranged at a spacing from this plane region (FB), **in that** the strain sensors (72, 74, 76, 78, 106, 108, 126, 128, 172, 174, 206, 208) are oriented approximately parallel to the plane region (FB) of the neutral reference plane (NRFV, NRFQ), and **in that** the strain sensors (72, 74, 76, 78, 106, 108, 126, 128, 172, 174, 206, 208) are arranged and oriented in such a way that they sense a horizontal tensile loading on the element (40) by a horizontal longitudinal force (FX).

2. A device in accordance with claim 1, **characterised in that** a neutral reference plane (NRFV, NRFQ) is associated with each bending load.

3. A device in accordance with claim 1 or 2, **characterised in that** a perpendicular projection of the strain sensors (72, 74, 76, 78, 106, 108, 126, 128, 172, 174, 206, 208 arranged on mutually opposite sides of the neutral reference plane (NRFV, NRFQ) onto the plane region (FB) lies within this plane region (FB), and **in that** in particular the plane region (FB), in each of its directions of extent, has an extent that is at most twice the extent of each of the strain sensors (72, 74, 76, 78, 106, 108, 126, 128, 172, 174, 206, 208) parallel to this direction of extent.

4. A device in accordance with any of the preceding claims, **characterised in that** the strain sensors (72, 74, 76, 78, 106, 108, 126, 128, 172, 174, 206, 208) arranged on the mutually opposite sides of the respective neutral reference plane are arranged at spacings from the respective neutral reference plane (NRFV, NRFQ) which are such that the spacing of the at least one strain sensor (106, 126, 206) on one side of the plane region (FB) of the neutral reference plane (NRFV, NRFQ) lies within the range of 0.5 times to 1.5 times the spacing of the at least one strain sensor (108, 128, 208) on the opposite side of the plane region (FB).

5. A device in accordance with any of the preceding claims, **characterised in that** the strain sensors (106, 108, 126, 128, 206, 208) are arranged on sensor carrier surfaces (102, 104, 122, 124, 202, 204) running approximately parallel to the plane region (FB) and are connected to said sensor carrier surfaces.

6. A device in accordance with any of the preceding claims, **characterised in that** in particular the supporting arm portion (60) is located in such a way that the neutral reference plane (NRFV, NRFQ) of this supporting arm portion (60) has a component in a horizontal longitudinal direction, and/or **in that** in particular the neutral reference plane (NRFV, NRFQ) of this supporting portion (60) runs substantially parallel to the horizontal longitudinal direction, in which the course of the neutral reference plane (NRFV, NRFQ) deviates from a course exactly parallel with the horizontal longitudinal direction by an angle of less than ± 30°.

7. A device in accordance with any of the preceding claims, **characterised in that** a sensor unit (90, 190) has a sensor carrier (92, 192) which is provided on mutually opposite sides with sensor carrier surfaces (102, 104, 122, 124, 202, 204) on which strain sensors (106, 108, 126, 128, 206, 208) are arranged and are connected thereto, and **in that** the sensor carrier (92, 192) is connected to the deformable supporting portion (60) of the supporting arm (30, 130) in such a manner that the sensor carrier (92, 192) displays a reversible deformation behaviour which is qualitatively identical to the reversible deformation behaviour of the supporting arm portion (60), **in that** in particular the sensor carrier (92, 192) is arranged relative to the supporting arm portion (60) in such a way that, for sensing a selected bending load, a neutral reference plane (NRFV, NRFQ) of the supporting arm portion (60) associated with this bending load intersects a volume region (94, 194) of the sensor carrier (92, 192) lying between the sensor carrier surfaces (102, 104, 122, 124, 202, 204), **in that** in particular the neutral reference plane (NRFV, NRFQ) intersects a central volume region (94, 194) of the sensor carrier (92, 192), and/or **in that** in particular the sensor carrier (92, 192) extends along the neutral reference plane (NRFV, NRFQ), and/or **in that** in particular the sensor carrier surfaces (102, 104, 122, 124, 202, 204) are arranged on mutually opposite sides of a longitudinal centre axis (93) of the sensor carrier (92, 192), and/or **in that** in particular the mutually opposite sensor carrier surfaces (102, 104, 122, 124, 202, 204) are each disposed at spacings from the neutral reference plane (NRFV, NRFQ) which differ from each other by a factor in the range of 0.5 to 1.5.

8. A device in accordance with claim 7, **characterised in that** the sensor carrier (92, 192) has such a small influence on the reversible deformation behaviour of the supporting arm portion (60) that the magnitude of the reversible deformations of the supporting arm portion (60) which occur when the sensor carrier (92, 192) is present amounts to at least 0.90 times the magnitude of the reversible deformations of the supporting arm portion (60) without the sensor carrier (92, 192).

9. A device in accordance with claim 7 or 8, **characterised in that** the sensor carrier (92, 192) is connected in one piece to the supporting arm portion (60), and **in that** in particular the sensor carrier (92, 192) consists of a material having the same coefficient of thermal expansion as the supporting arm portion (60) to which it is connected.

10. A device in accordance with claim 7 or 8, **characterised in that** the sensor carrier (92, 192) is a component mounted on the supporting arm portion (60), and **in that** in particular the sensor carrier (92, 192) consists of a material having the same coefficient of thermal expansion as the supporting arm portion (60) to which it is connected.

11. A device in accordance with claim 10, **characterised in that** the sensor carrier (92, 192) has mutually spaced-apart end regions (112, 114), and **in that** the sensor carrier surfaces (102, 104, 122, 124, 202, 204) for the strain sensors (106, 108, 126, 128, 206, 208) lie between the end regions (112, 114), **in that** in particular only the end regions (112, 114) of the sensor carrier (92, 192) are held in receptacles (116, 118) which are arranged on the supporting arm portion (60) and which transfer to the sensor carrier (92, 192) the reversible deformations occurring in the supporting arm portion (60) due to the loads, **in that** in particular the end regions (112, 114) engage in receptacles (116, 118) in the supporting arm portion (60) which fix these end regions (112, 114) in a positive-locking manner and which transfer to the sensor carrier (92, 192) the reversible deformations of the supporting arm portion (60) comprising the receptacles (116, 118) and additionally extending between the receptacles (116, 118), and/or **in that** in particular the receptacles (116, 118) have receptacle surfaces (236, 238) which act on the end regions (112, 114) and have at least one component that extends in parallel with the respective neutral reference plane (NRFV, NRFQ), and/or **in that** in particular the end regions (112, 114) have positive-locking surfaces (232, 234) extending with at least one component in parallel with the respective neutral reference plane (NRFV, NRFQ).

12. A device in accordance with any one of claims 7 to 11, **characterised in that** the sensor carrier (92, 192) extends, in particular with its longitudinal centre axis, with at least one component in a horizontal longitudinal direction, **in that** in particular the sensor carrier (92, 192) extends substantially parallel to the horizontal longitudinal direction.

13. A device in accordance with any one of claims 7 to 11, **characterised in that** the sensor carrier (92, 192) is arranged beside the supporting arm portion (60), offset in a direction parallel to the respective neutral reference plane (NRFV, NRFQ), and **in that** in particular the sensor carrier (92, 192) is arranged on a longitudinal side of the supporting arm portion (60).

14. A device in accordance with any one of claims 7 to 11, **characterised in that** the supporting arm portion (60) has a recess (80, 180), and **in that** the sensor carrier (92, 192) is arranged so as to engage in the recess (80) of the supporting arm portion (60).

15. A device in accordance with any one of claims 7 to 14, **characterised in that**, as measured along the selected neutral reference plane (NRFV, NRFQ), the supporting arm portion (60) is spaced from the first end region (32, 132) by a spacing which lies in the range of 0.3 times to 2 times the spacing from the second end region (34, 134), and/or **in that** in particular a curved piece (144, 148) is provided between an intermediate region (146) of the supporting arm (30, 130) comprising the supporting arm portion (60) and the first end region (32, 130) and/or the second end region (34, 134) of the supporting arm (30, 130), and/or **in that** in particular the supporting arm portion (60) lies in a central region between the first end region (32, 132) and the second end region (34, 134) of the supporting arm (30, 130).

16. A device in accordance with any of the preceding claims, **characterised in that** an evaluation unit is provided which evaluates the signals of the strain sensors (72, 74, 76, 78, 106, 108, 126, 128, 172, 174, 206, 208), **in that** in particular the evaluation unit (AU) determines the force (FZ) acting on the element (40) in the vertical direction (Z), and/or **in that** in particular an evaluation unit determines a horizontal transverse force (FY), and/or **in that** in particular the evaluation unit (AU) determines a horizontal longitudinal force (FX).

17. A device in accordance with claim 16, **characterised in that** there is associated with the evaluation unit (AU) an acceleration sensor (BSH), and **in that** in particular the acceleration sensor (BSH) senses at least one acceleration in the horizontal longitudinal direction (X).

## Revendications

1. Dispositif (20, 30, 40) pouvant être monté côté arrière d'une carrosserie de véhicule à moteur (14) pour tirer une remorque et/ou maintenir une unité de support de charges,
comprenant un bras de maintien (30, 130) relié par une première zone d'extrémité (32, 132) à la carrosserie de véhicule à moteur (14),
en particulier un col de boule, qui est pourvu sur une deuxième zone d'extrémité (34, 134) d'un élément (40), en particulier une boule d'attelage, pour atteler la remorque et/ou pour fixer l'unité de support de charges, et comprenant en outre des capteurs pour détecter des déformations réversibles du bras de maintien (30, 130), liées à des contraintes du bras de maintien (30, 130),
dans lequel
des capteurs d'allongement (72, 74, 76, 78, 106, 108, 126, 128, 172, 174, 206, 208) influencés par leurs déformations réversibles sont associés à une section de bras de maintien (60) du bras de maintien (30, 130), et **caractérisé en ce que**
pour détecter au moins une contrainte de flexion sélectionnée, qui est liée à une force appliquée sur l'élément (40) dans une direction verticale, au moins un capteur d'allongement (72, 76, 106, 108, 126, 172, 206) est disposé sur un côté et au moins un capteur d'allongement (74, 78, 108, 128, 174, 208) est disposé sur un côté opposé d'une zone de surface (FB) d'une surface de référence neutre verticale (NRFV) associée à la contrainte de flexion sélectionnée, dans lequel la surface de référence neutre verticale (NRFV) s'étend à travers une fibre neutre verticale (NFV) de part en part et s'étend de manière perpendiculaire par rapport à une surface de déplacement par flexion apparaissant lors de la contrainte de flexion verticale (BV), **en ce que** les capteurs d'allongement (72, 74, 76, 78, 106, 108, 126, 128, 172, 174, 206, 208) sont disposés respectivement à une distance par rapport à ladite zone de surface (FB), **en ce que** les capteurs d'allongement (72, 74, 76, 78, 106, 108, 126, 128, 172, 174, 206, 208) sont orientés approximativement de manière parallèle par rapport à la zone de surface (FB) de la surface de référence neutre (NRFV, NRFQ), et **en ce que** les capteurs d'allongement (72, 74, 76, 78, 106, 108, 126, 128, 172, 174, 206, 208) sont disposés et sont orientés de telle manière qu'ils détectent une contrainte de traction horizontale par une force longitudinale horizontale (FX) sur l'élément (40).

2. Dispositif selon la revendication 1, **caractérisé en ce qu'**une surface de référence neutre (NRFV, NRFQ) est associée à chaque contrainte de flexion.

3. Dispositif selon la revendication 1 ou 2, **caractérisé en ce qu'**une projection perpendiculaire des capteurs d'allongement (72, 74, 76, 78, 106, 108, 126, 128, 172, 174, 206, 208) disposés sur des côtés se faisant face les uns les autres de la surface de référence neutre (NRFV, NRFQ) se situe sur la zone de surface (FB) à l'intérieur de ladite zone de surface (FB), **en ce qu'**en particulier la zone de surface (FB) présente dans chacune de ses directions d'extension une extension, qui est au maximum le double de l'extension de chacun des capteurs d'allongement (72, 74, 76, 78, 106, 108, 126, 128, 172, 174, 206, 208) de manière parallèle à ladite direction d'extension.

4. Dispositif selon l'une quelconque des revendications précédentes, **caractérisé en ce que** les capteurs d'allongement (72, 74, 76, 78, 106, 108, 126, 128, 172, 174, 206, 208) disposés sur les côtés se faisant face les uns les autres de la surface de référence neutre respective sont disposés à de telles distances par rapport à la surface de référence neutre (NRFV, NRFQ) respective que les distances de l'au moins un capteur d'allongement (106, 126, 206) sur un côté par rapport à la zone de surface (FB) de la surface de référence neutre (NRFV, NRFQ) se situent dans la plage de 0,5 fois à 1,5 fois la distance de l'au moins un capteur d'allongement (108, 128, 208) sur le côté faisant face par rapport à la zone de surface (FB).

5. Dispositif selon l'une quelconque des revendications précédentes, **caractérisé en ce que** les capteurs d'allongement (106, 108, 126, 128, 206, 208) sont disposés sur des surfaces de support de capteur (102, 104, 122, 124, 202, 204) s'étendant approximativement de manière parallèle par rapport à la zone de surface (FB) et sont reliés à celles-ci.

6. Dispositif selon l'une quelconque des revendications précédentes, **caractérisé en ce qu'**en particulier la section de bras de maintien (60) est fixée de telle manière que la surface de référence neutre (NRFV, NRFQ) de ladite section de bras de maintien (60) présente une composante dans une direction longitudinale horizontale, et/ou **en ce qu'**en particulier la surface de référence neutre (NFRV, NRFQ) de ladite section de maintien (60) s'étend sensiblement de manière parallèle par rapport à la direction longitudinale horizontale, où le profil de la surface de référence neutre (NRFV, NRFQ) dans un angle inférieur à ± 30° diverge d'un profil exactement parallèle par rapport à la direction longitudinale horizontale.

7. Dispositif selon l'une quelconque des revendications précédentes, **caractérisé en ce qu'**une unité de capteur (90, 190) présente un support de capteur (92, 192), qui est pourvu sur des côtés se faisant face les uns les autres de surfaces de support de capteur (102, 104, 122, 124, 202, 204), sur lesquelles des capteurs d'allongement (106, 108, 126, 128, 206, 208) sont disposés et sont reliés à celles-ci, et que le support de capteur (92, 192) est relié à la section de maintien (60) déformable du bras de maintien (30, 130) de telle manière que le support de capteur (92, 192) affiche un comportement de déformation réversible, qui est identique sur le plan qualitatif au comportement de déformation réversible de la section de bras de maintien (60), **en ce qu'**en particulier le support de capteur (92, 192) est disposé de telle sorte par rapport à la section de bras de maintien (60), **en ce qu'**une surface de référence neutre (NRFV, NRFQ) de la section de bras de maintien (60) associée à une contrainte de flexion traverse, pour détecter ladite contrainte de flexion sélectionnée, une zone de volume (94, 194) du support de capteur (92, 192), située entre les surfaces de support de capteur (102, 104, 122, 124, 202, 204), **en ce qu'**en particulier la surface de référence neutre (NRFV, NRFQ) traverse une zone de volume centrale (94, 194) du support de capteur (92, 192), et/ou **en ce qu'**en particulier le support de capteur (92, 192) s'étend le long de la surface de référence neutre (NRFV, NRFQ), et/ou **en ce qu'**en particulier les surfaces de support de capteur (102, 104, 122, 124, 202, 204) sont disposées sur des côtés se faisant face les uns les autres d'un axe central longitudinal (93) du support de capteur (92, 192), et/ou **en ce qu'**en particulier les surfaces de support de capteur (102, 104, 122, 124, 202, 204) se faisant face les unes les autres présentent respectivement des distances par rapport à la surface de référence neutre (NRFV, NRFQ), qui se distinguent les unes des autres d'un facteur dans la plage de 0,5 à 1,5.

8. Dispositif selon la revendication 7, **caractérisé en ce que** le support de capteur (92, 192) présente une telle incidence minime sur le comportement de déformation réversible de la section de bras de maintien (60) que la grandeur des déformations réversibles, apparaissant en cas de présence d'un support de capteur (92, 192), de la section de bras de maintien (60) est au moins de 0,90 fois la grandeur des déformations réversibles de la section de bras de maintien (60) sans le support de capteur (92, 192).

9. Dispositif selon la revendication 7 ou 8, **caractérisé en ce que** le support de capteur (92, 192) est relié d'un seul tenant à la section de bras de maintien (60), et **en ce qu'**en particulier le support de capteur (92, 192) est composé d'un matériau avec le même coefficient de dilation thermique que la section de bras de maintien (60), à laquelle celui-ci est relié.

10. Dispositif selon la revendication 7 ou 8, **caractérisé en ce que** le support de capteur (92, 192) est un composant monté sur la section de bras de maintien (60), et **en ce qu'**en particulier le support de capteur (92, 192) est composé d'un matériau avec le même coefficient de dilatation thermique que la section de bras de maintien (60), à laquelle celui-ci est relié.

11. Dispositif selon la revendication 10, **caractérisé en ce que** le support de capteur (92, 192) présente des zones d'extrémité (112, 114) disposées à distance les unes des autres, et **en ce que** les surfaces de support de capteur (102, 104, 122, 124, 202, 204) pour les capteurs d'allongement (106, 108, 126, 128, 206, 208) se situent entre les zones d'extrémité (112, 114), **en ce qu'**en particulier seulement les zones d'extrémité (112, 114) du support de capteur (92, 192) sont maintenues dans des logements (116, 118) disposés sur la section de bras de maintien (60), lesquels transmettent les déformations réversibles apparaissant du fait des contraintes dans la section de bras de maintien (60) sur le support de capteur (92, 192), **en ce qu'**en particulier les zones d'extrémité (112, 114) viennent en prise avec des logements (116, 118) bloquant par complémentarité de forme lesdites zones d'extrémité (112, 114) dans la section de bras de maintien (60), qui transmettent sur le support de capteur (92,192) les déformations réversibles de la section de bras de maintien (60) comprenant les logements (116, 118) et s'étendant par ailleurs entre les logements (116, 118), et/ou **en ce qu'**en particulier les logements (116, 118) présentent des surfaces de logement (236, 238) s'étendant avec au moins une composante de manière parallèle par rapport à la surface de référence neutre (NRFV, NFFQ) respective et agissant sur les zones d'extrémité (112, 114), et/ou **en ce qu'**en particulier les zones d'extrémité (112, 114) présentent des surfaces à complémentarité de forme (232, 234) s'étendant avec au moins une composante de manière parallèle par rapport à la surface de référence neutre (NFRV, NRFQ) respective.

12. Dispositif selon l'une quelconque des revendications 7 à 11, **caractérisé en ce que** le support de capteur (92, 192) s'étend, en particulier avec son axe central longitudinal, avec au moins une composante dans une direction longitudinale horizontale, **en ce qu'**en particulier le support de capteur (92, 192) s'étend sensiblement de manière parallèle par rapport à la direction longitudinale horizontale.

13. Dispositif selon l'une quelconque des revendications 7 à 11, **caractérisé en ce que** le support de capteur (92, 192) est disposé de manière décalée à côté de la section de bras de maintien (60) dans une direction parallèle au plan de référence neutre (NRFV, NRFQ) respectif, **en ce qu'**en particulier le support de capteur (92, 192) est disposé sur un côté longitudinal de la section de bras de maintien (60).

14. Dispositif selon l'une quelconque des revendications 7 à 11, **caractérisé en ce que** la section de bras de maintien (60) présente un évidement (80, 180), et **en ce que** le support de capteur (92, 192) est disposé de manière à venir en prise avec l'évidement (80) de la section de bras de maintien (60).

15. Dispositif selon l'une quelconque des revendications 7 à 14, **caractérisé en ce que** la section de bras de maintien (60) présente, selon une mesure le long de la surface de référence neutre (NRFV, NRFQ) sélectionnée, une distance par rapport à la première zone d'extrémité (32, 132), qui se situe dans la plage de 0,3 fois à 2 fois la distance par rapport à la deuxième zone d'extrémité (34, 134), et/ou **en ce qu'**une pièce courbée (144, 148) est prévue en particulier entre une zone intermédiaire (146), comprenant la section de bras de maintien (60), du bras de maintien (30, 130) et la première zone d'extrémité (32, 132) et/ou la deuxième zone d'extrémité (34, 134) du bras de maintien (30, 130), et/ou **en ce qu'**en particulier la section de bras de maintien (60) se situe dans une zone centrale entre la première zone d'extrémité (32, 132) et la deuxième zone d'extrémité (34, 134) du bras de maintien (30, 130).

16. Dispositif selon l'une quelconque des revendications précédentes, **caractérisé en ce qu'**est prévue une unité d'évaluation, laquelle évalue les signaux des capteurs d'allongement (72, 74, 76, 78, 106, 108, 126, 128, 172, 174, 206, 208), **en ce qu'**en particulier l'unité d'évaluation (AU) détermine la force (FZ) agissant sur l'élément (40) dans une direction verticale (Z), et/ou **en ce qu'**en particulier une unité d'évaluation détermine une force transversale horizontale (FY), et/ou **en ce qu'**en particulier l'unité d'évaluation (AU) détermine une force longitudinale horizontale (FX).

17. Dispositif selon la revendication 16, **caractérisé en ce qu'**un capteur d'accélération (BSH) est associé à l'unité d'évaluation (AU), **en ce qu'**en particulier le capteur d'accélération (BSH) détecte au moins une accélération dans la direction longitudinale horizontale (X).
